# EUROPEAN PATENT APPLICATION

(11) **EP 4 492 727 A1**
(43) Date of publication of application: **15.01.2025**
(21) Application number: 23784263.8
(22) Date of filing: 04.04.2023
(51) Int. Cl.: H04L 9/32

(54) **DIGITAL CERTIFICATE VERIFICATION METHOD AND APPARATUS, DEVICE, AND COMPUTER READABLE STORAGE MEDIUM**

(30) Priority: 07.04.2022 CN 202210363720
(71) Applicant: Huawei Technologies Co., Ltd., Shenzhen, Guangdong 518129 (CN)
(72) Inventor: WANG, Guilin, Shenzhen, Guangdong 518129 (CN); YANG, Yanjiang, Shenzhen, Guangdong 518129 (CN); ZHANG, Jie, Shenzhen, Guangdong 518129 (CN)
(74) Representative: Gill Jennings & Every LLP
(86) International application number: PCT/CN2023/086128
(87) International publication number: WO 2023/193700

(57) **Abstract**

This application discloses a digital certificate verification method, apparatus, and device, and a computer-readable storage medium, and belongs to the field of information and communication technologies. The method includes: A first device receives a first link certificate and a first digital certificate that are sent by a second device, and verifies validity of the first digital certificate based on a root certificate trusted by the first device and the first link certificate. In this application, the first device and the second device do not need to confirm a root certificate trusted by a peer device, and the first device does not need to additionally upload another certificate or perceive a case in which at least two root certificates coexist. The first device may verify the validity of the first digital certificate based on the root certificate trusted by the first device and the received first link certificate. Therefore, the method is simple and easy to implement and has a wide application scope.

## Description

This application claims priority to Chinese Patent Application No. 202210363720.9, filed on April 7, 2022 and entitled "DIGITAL CERTIFICATE VERIFICATION METHOD, APPARATUS, AND DEVICE, AND COMPUTER-READABLE STORAGE MEDIUM", which is incorporated herein by reference in its entirety.

### TECHNICAL FIELD

This application relates to the field of information and communication technologies (information and communication technologies, ICTs), and in particular, to a digital certificate verification method, apparatus, and device, and a computer-readable storage medium.

### BACKGROUND

In the ICT field, devices hold digital certificates. Before a device communicates with another device, validity of a digital certificate held by the another device needs to be verified. A validity verification process depends on a root certificate, and the root certificate has a specific validity period. To ensure continuity of a communication process, a new root certificate needs to be introduced before an old root certificate expires, and a validity period of the new root certificate needs to be later than that of the old root certificate. Therefore, a case in which at least two root certificates coexist occurs. How to verify validity of a digital certificate in a case in which at least two root certificates coexist becomes an urgent problem to be resolved.

### SUMMARY

This application provides a digital certificate verification method, apparatus, and device, and a computer-readable storage medium, to verify validity of a digital certificate in a case in which at least two root certificates coexist. Technical solutions provided in this application are as follows.

According to a first aspect, a digital certificate verification method is provided, and the method is applied to a first device. The first device receives a first link certificate and a first digital certificate that are sent by a second device, and verifies the first digital certificate based on a root certificate trusted by the first device and the first link certificate. The first link certificate is at least one of at least one link certificate stored in the second device. One link certificate is obtained by signing, based on a private key of a root certificate with an earlier validity period in two root certificates, a public key of a root certificate with a later validity period in the two root certificates. The two root certificates are any two of at least two root certificates stored in the second device. A root certificate trusted by the first device is at least one of the at least two root certificates. The first digital certificate is generated based on a private key of a root certificate with a latest validity period in the at least two root certificates and information about the second device.

In this application, the first device stores the root certificate trusted by the first device, does not need to additionally upload another certificate, and only needs to receive the first link certificate and the first digital certificate that are sent by the second device, so that the first device verifies validity of the first digital certificate in a case in which the second device has at least two root certificates. In addition, the first device and the second device do not need to mutually confirm a root certificate trusted by a peer device, so that the case in which the at least two root certificates coexist is transparent and imperceptible to the first device. The method provided in this application is not only simple and easy to implement, but also has a wide application scope. In addition, complexity of a digital certificate verification process is reduced, and verification costs are reduced.

In a possible implementation, the root certificate trusted by the first device is any one of the at least two root certificates, and the method further includes: The first device sends a second digital certificate to the second device, so that the second device verifies validity of the second digital certificate, where the second digital certificate is generated based on a private key of the root certificate trusted by the first device and information about the first device.

The first device sends the second digital certificate to the second device, so that the second device can verify the validity of the second digital certificate. In this process, the first device and the second device do not need to confirm a root certificate trusted by a peer device, and the first device does not need to perceive a case in which at least two root certificates coexist. Therefore, this manner has a wide application scope.

In a possible implementation, root certificates trusted by the first device include at least two of the at least two root certificates, and the method further includes: The first device sends a second link certificate and a second digital certificate to the second device, so that the second device verifies validity of the second digital certificate, where the second link certificate is at least one of link certificates corresponding to the root certificates trusted by the first device, and the second digital certificate is generated based on a private key of a root certificate with a latest validity period in the root certificates trusted by the first device and information about the first device.

The first device sends the second link certificate and the second digital certificate to the second device, so that the second device can verify the validity of the second digital certificate. In this process, the first device and the second device do not need to confirm a root certificate trusted by a peer device, and the first device does not need to perceive a case in which at least two root certificates coexist. Therefore, this manner has a wide application scope.

In a possible implementation, the root certificates trusted by the first device include a root certificate with a latest validity period, and the method further includes: Before the root certificate with the latest validity period expires, and after a root certificate with a non-latest validity period in the at least two root certificates expires, the first device receives the first digital certificate sent by the second device; and the first device verifies the validity of the first digital certificate based on the root certificate with the latest validity period.

As time elapses, only the root certificate with the latest validity period in the at least two valid root certificates is still valid. In this case, the first device can still verify the validity of the first digital certificate of the second device.

In a possible implementation, the method further includes: The first device revokes, in a direct revocation manner, at least one certificate of the root certificates trusted by the first device, to invalidate the at least one revoked certificate.

The direct revocation manner is universally applicable and has a wide application scope.

In a possible implementation, the method further includes: The first device receives application scenario information sent by the second device; and after verifying that the first digital certificate is valid, the first device confirms that the application scenario information is correct.

The application scenario information is used, so that the digital certificate verification method provided in this application may be further applied to different application scenarios. The application scenario information may be flexibly determined based on an application scenario.

In a possible implementation, the first device meets a reference condition, and the reference condition includes at least one of the following conditions: A capacity of certificate storage space is greater than a capacity threshold, and the first device has a root certificate update function; or the first device has an alarm function.

The first device is enabled to meet the reference condition, so that the first device is applicable to a special scenario such as an emergency update of a root certificate. This expands an application scope of the first device. In addition, the first device is enabled to have the alarm function, so that the first device may generate an alarm for a user in a time, to prevent communication security of the first device from being affected by a root certificate update failure.

According to a second aspect, a digital certificate verification method is provided, and the method is applied to a first device and includes: The first device receives a first link certificate, at least one subordinate certification authority certificate, and a first digital certificate that are sent by a second device; and then, the first device verifies validity of the first digital certificate based on a root certificate trusted by the first device, the at least one subordinate certification authority certificate, and the first link certificate. The first link certificate is at least one of at least one link certificate stored in the second device, the root certificate trusted by the first device is at least one of at least two root certificates, one link certificate is obtained by signing, based on a private key of a root certificate with an earlier validity period in two root certificates, a public key of a root certificate with a later validity period in the two root certificates, the two root certificates are any two of at least two root certificates stored in the second device, and the first digital certificate is generated based on a private key of a root certificate with a latest validity period in the at least two root certificates, the at least one subordinate certification authority certificate stored in the second device, and information about the second device.

In a case in which the first digital certificate of the second device is generated based on the private key of the root certificate with the latest validity period in the at least two root certificates, the at least one subordinate certification authority certificate stored in the second device, and the information about the second device, the first device can still verify the validity of the first digital certificate on a premise that the first device does not additionally upload another certificate, does not perceive coexistence of at least two root certificates, and does not mutually confirm a root certificate trusted by a peer device with the second device. Therefore, this manner has a wide application scope.

According to a third aspect, a digital certificate verification method is provided, and the method is applied to a second device. The second device stores at least two valid root certificates, at least one link certificate, and a first digital certificate, one link certificate is obtained by signing, based on a private key of a root certificate with an earlier validity period in two root certificates, a public key of a root certificate with a later validity period in the two root certificates, the two root certificates are any two of the at least two root certificates, and the first digital certificate is generated based on a private key of a root certificate with a latest validity period in the at least two root certificates and information about the second device. The method includes: The second device sends a first link certificate and the first digital certificate to a first device, so that the first device verifies validity of the first digital certificate, where the first link certificate is at least one of the at least one link certificate, and the first link certificate is used to verify the validity of the first digital certificate.

In this application, the second device only needs to send the first link certificate and the first digital certificate to the first device, so that the first device can verify the validity of the first digital certificate. The first device stores a root certificate trusted by the first device, and the first device does not need to additionally upload another certificate in a verification process. In addition, the second device and the first device do not need to mutually confirm a root certificate trusted by a peer device, so that a case in which at least two root certificates coexist is transparent and imperceptible to the first device. The method provided in this application is not only simple and easy to implement, but also has a wide application scope. In addition, complexity of a digital certificate verification process is reduced, and verification costs are reduced.

In a possible implementation, the two root certificates are any two of root certificates with adjacent validity periods in the at least two root certificates.

In this application, a link certificate is generated by using root certificates with adjacent validity periods, so that a quantity of generated link certificates is low. Because the first link certificate is at least one of the link certificates, a quantity of link certificates is low. This helps reduce a quantity of certificates included in the first link certificate, and reduces transmission resources required for sending the first link certificate by the second device to the first device.

In a possible implementation, before the second device sends the first link certificate and the first digital certificate to the first device, the method further includes: The second device queries a root certificate trusted by the first device, where the root certificate trusted by the first device is at least one of the at least two root certificates; and the second device selects the first link certificate from the at least one link certificate based on the root certificate trusted by the first device, where the root certificate trusted by the first device is used to verify validity of the first link certificate.

The second device is enabled to query the root certificate trusted by the first device, so that the second device may pertinently select the first link certificate from the at least one link certificate, and does not need to use all the link certificates as the first link certificate. Therefore, a quantity of certificates included in the first link certificate is reduced, and transmission resources required for sending the first link certificate by the second device to the first device are reduced.

In a possible implementation, the root certificate trusted by the first device is any one of the at least two root certificates, and the method further includes: The second device receives a second digital certificate sent by the first device, where the second digital certificate is generated based on a private key of the root certificate trusted by the first device and information about the first device; and the second device verifies validity of the second digital certificate based on the root certificate trusted by the first device.

The second device receives the second digital certificate and verifies the validity of the second digital certificate. The first device and the second device do not need to confirm a root certificate trusted by a peer device, and the first device does not need to perceive a case in which at least two root certificates coexist. Therefore, this manner has a wide application scope.

In a possible implementation, root certificates trusted by the first device are at least two of the at least two root certificates, and the method further includes: The second device receives a second link certificate and a second digital certificate that are sent by the first device, where the second link certificate is at least one of link certificates corresponding to the root certificates trusted by the first device, and the second digital certificate is generated based on a private key of a root certificate with a latest validity period in the root certificates trusted by the first device and information about the first device; and the second device verifies validity of the second digital certificate based on the root certificates trusted by the first device and the second link certificate.

The second device receives the second link certificate and the second digital certificate and verifies the validity of the second digital certificate. In this process, the first device and the second device do not need to confirm a root certificate trusted by a peer device, and the first device does not need to perceive a case in which at least two root certificates coexist. Therefore, this manner has a wide application scope.

In a possible implementation, the root certificates trusted by the first device include a root certificate with a latest validity period, and the method further includes: Before the root certificate with the latest validity period expires, and after a root certificate with a non-latest validity period in the at least two root certificates expires, the second device sends the first digital certificate to the first device, so that the first device verifies the validity of the first digital certificate based on the root certificate with the latest validity period.

As time elapses, only the root certificate with the latest validity period in the at least two valid root certificates is still valid. In this case, the first device can still verify the validity of the first digital certificate of the second device.

In a possible implementation, the method further includes: The second device revokes, in a direct revocation manner, at least one certificate of the at least two root certificates, the at least one link certificate, and the first digital certificate, to invalidate the at least one revoked certificate.

The direct revocation manner is universally applicable and has a wide application scope.

In a possible implementation, the method further includes: The second device sends application scenario information corresponding to the second device to the first device, so that after verifying that the first digital certificate is valid, the first device confirms that the application scenario information is correct.

The second device sends the application scenario information to the first device, so that the digital certificate verification method provided in this application may be applied to different application scenarios. The application scenario information may be flexibly determined based on an application scenario.

In a possible implementation, the second device meets a reference condition, and the reference condition includes at least one of the following conditions: A capacity of certificate storage space is greater than a capacity threshold, and the second device has a root certificate update function; or the second device has an alarm function.

The second device is enabled to meet the reference condition, so that the second device is applicable to a special scenario such as an emergency update of a root certificate. This expands an application scope of the second device. In addition, the second device is enabled to have the alarm function, so that the second device may generate an alarm for a user in a time, to prevent communication security of the second device from being affected by a root certificate update failure.

In a possible implementation, the first device is configured to verify the validity of the first digital certificate based on the root certificate trusted by the first device and the first link certificate, where the root certificate trusted by the first device is at least one of the at least two root certificates.

According to a fourth aspect, a digital certificate verification method is provided, and the method is applied to a second device. The second device stores at least two valid root certificates, at least one subordinate certification authority certificate, at least one link certificate, and a first digital certificate, one link certificate is obtained by signing, based on a private key of a root certificate with an earlier validity period in two root certificates, a public key of a root certificate with a later validity period in the two root certificates, the two root certificates are any two of the at least two root certificates, and the first digital certificate is generated based on a private key of a root certificate with a latest validity period in the at least two root certificates, the at least one subordinate certification authority certificate, and information about the second device. The method includes: The second device sends a first link certificate, the at least one subordinate certification authority certificate, and the first digital certificate to a first device, so that the first device verifies validity of the first digital certificate, where the first link certificate is at least one of the at least one link certificate, and the first link certificate and the at least one subordinate certification authority certificate are used to verify the validity of the first digital certificate.

According to a fifth aspect, a digital certificate verification apparatus is provided, where the apparatus is used in a first device. The apparatus includes:
a receiving module, configured to receive a first link certificate and a first digital certificate that are sent by a second device, where the first link certificate is at least one of at least one link certificate stored in the second device, one link certificate is obtained by signing, based on a private key of a root certificate with an earlier validity period in two root certificates, a public key of a root certificate with a later validity period in the two root certificates, the two root certificates are any two of at least two root certificates stored in the second device, and the first digital certificate is generated based on a private key of a root certificate with a latest validity period in the at least two root certificates and information about the second device; and
a verification module, configured to verify validity of the first digital certificate based on a root certificate trusted by the first device and the first link certificate, where the root certificate trusted by the first device is at least one of the at least two root certificates.

In a possible implementation, the root certificate trusted by the first device is any one of the at least two root certificates, and the apparatus further includes a first sending module, configured to send a second digital certificate to the second device, so that the second device verifies validity of the second digital certificate, where the second digital certificate is generated based on a private key of the root certificate trusted by the first device and information about the first device.

In a possible implementation, root certificates trusted by the first device include at least two of the at least two root certificates, and the apparatus further includes a second sending module, configured to send a second link certificate and a second digital certificate to the second device, so that the second device verifies validity of the second digital certificate, where the second link certificate is at least one of link certificates corresponding to the root certificates trusted by the first device, and the second digital certificate is generated based on a private key of a root certificate with a latest validity period in the root certificates trusted by the first device and information about the first device.

In a possible implementation, the root certificates trusted by the first device include a root certificate with a latest validity period, and the receiving module is further configured to: before the root certificate with the latest validity period expires, and after a root certificate with a non-latest validity period in the at least two root certificates expires, receive the first digital certificate sent by the second device; and the verification module is further configured to verify the validity of the first digital certificate based on the root certificate with the latest validity period.

In a possible implementation, the apparatus further includes: a revocation module, configured to revoke, in a direct revocation manner, at least one certificate of the root certificates trusted by the first device, to invalidate the at least one revoked certificate.

In a possible implementation, the receiving module is further configured to receive application scenario information sent by the second device; and the verification module is further configured to: after verifying that the first digital certificate is valid, confirm that the application scenario information is correct.

In a possible implementation, the first device meets a reference condition, and the reference condition includes at least one of the following conditions: A capacity of certificate storage space is greater than a capacity threshold, and the first device has a root certificate update function; or the first device has an alarm function.

According to a sixth aspect, a digital certificate verification apparatus is provided, where the apparatus is used in a first device. The apparatus includes:
a receiving module, configured to receive a first link certificate, at least one subordinate certification authority certificate, and a first digital certificate that are sent by a second device, where the first link certificate is at least one of at least one link certificate stored in the second device, one link certificate is obtained by signing, based on a private key of a root certificate with an earlier validity period in two root certificates, a public key of a root certificate with a later validity period in the two root certificates, the two root certificates are any two of at least two root certificates stored in the second device, and the first digital certificate is generated based on a private key of a root certificate with a latest validity period in the at least two root certificates, the at least one subordinate certification authority certificate stored in the second device, and information about the second device; and
a verification module, configured to verify validity of the first digital certificate based on a root certificate trusted by the first device, the at least one subordinate certification authority certificate, and the first link certificate, where the root certificate trusted by the first device is at least one of the at least two root certificates.

According to a seventh aspect, a digital certificate verification apparatus is provided, where the apparatus is used in a second device, the second device stores at least two valid root certificates, at least one link certificate, and a first digital certificate, one link certificate is obtained by signing, based on a private key of a root certificate with an earlier validity period in two root certificates, a public key of a root certificate with a later validity period in the two root certificates, the two root certificates are any two of the at least two root certificates, and the first digital certificate is generated based on a private key of a root certificate with a latest validity period in the at least two root certificates and information about the second device. The apparatus includes:
a sending module, configured to send a first link certificate and the first digital certificate to a first device, so that the first device verifies validity of the first digital certificate, where the first link certificate is at least one of the at least one link certificate, and the first link certificate is used to verify the validity of the first digital certificate.

In a possible implementation, the two root certificates are any two of root certificates with adjacent validity periods in the at least two root certificates.

In a possible implementation, the apparatus further includes a query module, configured to query a root certificate trusted by the first device, where the root certificate trusted by the first device is at least one of the at least two root certificates; and a selection module, configured to select the first link certificate from the at least one link certificate based on the root certificate trusted by the first device, where the root certificate trusted by the first device is used to verify validity of the first link certificate.

In a possible implementation, the root certificate trusted by the first device is any one of the at least two root certificates, and the apparatus further includes a first verification module, configured to: receive a second digital certificate sent by the first device, where the second digital certificate is generated based on a private key of the root certificate trusted by the first device and information about the first device; and verify validity of the second digital certificate based on the root certificate trusted by the first device.

In a possible implementation, root certificates trusted by the first device are at least two of the at least two root certificates, and the apparatus further includes a second verification module, configured to: receive a second link certificate and a second digital certificate that are sent by the first device, where the second link certificate is at least one of link certificates corresponding to the root certificates trusted by the first device, and the second digital certificate is generated based on a private key of a root certificate with a latest validity period in the root certificates trusted by the first device and information about the first device; and verify validity of the second digital certificate based on the root certificates trusted by the first device and the second link certificate.

In a possible implementation, the root certificates trusted by the first device include a root certificate with a latest validity period, and the sending module is further configured to: before the root certificate with the latest validity period expires, and after a root certificate with a non-latest validity period in the at least two root certificates expires, send the first digital certificate to the first device, so that the first device verifies the validity of the first digital certificate based on the root certificate with the latest validity period.

In a possible implementation, the apparatus further includes a revocation module, configured to revoke, in a direct revocation manner, at least one certificate of the at least two root certificates, the at least one link certificate, and the first digital certificate, to invalidate the at least one revoked certificate.

In a possible implementation, the sending module is further configured to send, to the first device, application scenario information corresponding to the second device, so that after verifying that the first digital certificate is valid, the first device confirms that the application scenario information is correct.

In a possible implementation, the second device meets a reference condition, and the reference condition includes at least one of the following conditions: A capacity of certificate storage space is greater than a capacity threshold, and the second device has a root certificate update function; or the second device has an alarm function.

In some possible implementations, the first device is configured to verify the validity of the first digital certificate based on the root certificate trusted by the first device and the first link certificate, where the root certificate trusted by the first device is at least one of the at least two root certificates.

According to an eighth aspect, a digital certificate verification apparatus is provided, where the apparatus is used in a second device, the second device stores at least two valid root certificates, at least one subordinate certification authority certificate, at least one link certificate, and a first digital certificate, one link certificate is obtained by signing, based on a private key of a root certificate with an earlier validity period in two root certificates, a public key of a root certificate with a later validity period in the two root certificates, the two root certificates are any two of the at least two root certificates, and the first digital certificate is generated based on a private key of a root certificate with a latest validity period in the at least two root certificates, the at least one subordinate certification authority certificate, and information about the second device. The apparatus includes:
a sending module, configured to send a first link certificate, the at least one subordinate certification authority certificate, and the first digital certificate to a first device, so that the first device verifies validity of the first digital certificate, where the first link certificate is at least one of the at least one link certificate, and the first link certificate and the at least one subordinate certification authority certificate are used to verify the validity of the first digital certificate.

According to a ninth aspect, a digital certificate verification device is provided. The device includes a network interface, a memory, and a processor. The network interface is used by the device to perform communication, the memory stores at least one instruction, and the at least one instruction is loaded and executed by the processor, to enable the device to implement methods in the foregoing aspects.

According to a tenth aspect, a digital certificate verification system is provided. The system includes a first device and a second device that are communicatively connected, the first device is configured to implement the digital certificate verification method in the first aspect, and the second device is configured to implement the digital certificate verification method in the third aspect. Alternatively, the first device is configured to implement the digital certificate verification method in the second aspect, and the second device is configured to implement the digital certificate verification method in the fourth aspect.

Optionally, there are one or more processors, and there are one or more memories.

Optionally, the memory may be integrated with the processor, or the memory and the processor are separately disposed.

According to an eleventh aspect, a computer program (product) is provided. The computer program (product) includes computer program code. When the computer program code is run by a computer, the computer is enabled to perform methods in the foregoing aspects.

According to a twelfth aspect, a computer-readable storage medium is provided. The computer-readable storage medium stores a program or instructions. When the program or the instructions is/are run on a computer, methods in the foregoing aspects are performed.

According to a thirteenth aspect, a chip is provided, including a processor, configured to invoke, from a memory, and run instructions stored in the memory, to enable a computer in which the chip is installed to perform methods in the foregoing aspects.

According to a fourteenth aspect, another chip is provided, including: an input interface, an output interface, a processor, and a memory. The input interface, the output interface, the processor, and the memory are connected through an internal connection path. The processor is configured to execute code in the memory, and when the code is executed, a computer in which the chip is installed performs methods in the foregoing aspects.

### BRIEF DESCRIPTION OF DRAWINGS

FIG. 1 is a diagram of an implementation environment according to an embodiment of this application;
FIG. 2 is a flowchart of a digital certificate verification method according to an embodiment of this application;
FIG. 3 is a diagram of a certificate relationship according to an embodiment of this application;
FIG. 4 is a flowchart of another digital certificate verification method according to an embodiment of this application;
FIG. 5 is a diagram of a digital certificate verification process according to an embodiment of this application;
FIG. 6 is a diagram of another digital certificate verification process according to an embodiment of this application;
FIG. 7 is a diagram of still another digital certificate verification process according to an embodiment of this application;
FIG. 8 is a diagram of a structure of a digital certificate verification apparatus according to an embodiment of this application;
FIG. 9 is a diagram of a structure of another digital certificate verification apparatus according to an embodiment of this application;
FIG. 10 is a diagram of a structure of still another digital certificate verification apparatus according to an embodiment of this application;
FIG. 11 is a diagram of a structure of yet another digital certificate verification apparatus according to an embodiment of this application; and
FIG. 12 is a diagram of a structure of a digital certificate verification device according to an embodiment of this application.

### DESCRIPTION OF EMBODIMENTS

Terms used in embodiments of this application are only used to explain specific embodiments of this application, but are not intended to limit this application.

In the field of ICT, a public key infrastructure (public key infrastructure, PKI) is a basis for ensuring communication security. The PKI distributes digital certificates (certificates) to devices according to public key cryptography (public key cryptography, PKC). The digital certificates are also referred to as device certificates or service certificates. Before different devices communicate with each other, the devices need to verify validity of digital certificates of each other.

First, a digital certificate distribution process is described.

A root certification authority (root certification authority, RootCA) holds a root certificate and a private key of the RootCA. The root certificate includes a subject (subject) and a public key of the RootCA, the subject of the root certificate includes RootCA-related information, and the public key of the RootCA corresponds to the private key of the RootCA. The RootCA is also referred to as a level-1 CA.

A subordinate certification authority (subordinate certification authority, SubCA) submits SubCA-related information and a public key of the SubCA to the RootCA. SubCA-related information submitted by different SubCAs is different, and a public key of a SubCA submitted by the SubCA corresponds to a private key held by the SubCA. Then, the RootCA uses the private key of the RootCA to sign the SubCA-related information and the public key of the SubCA according to a given cryptographic algorithm, to form a signature of the RootCA. The RootCA delivers a SubCA certificate to the SubCA, so that the SubCA holds the SubCA certificate. The SubCA certificate includes a subject, the public key of the SubCA, and the signature of the RootCA, and the subject of the SubCA certificate includes the SubCA-related information. For the SubCA certificate, it may be considered that the SubCA certificate is obtained by signing the root certificate.

A device submits device-related information and a public key of the device to the SubCA. Device-related information submitted by different devices is different, and a public key of a device submitted by the device corresponds to a private key held by the device. The SubCA uses the private key of the SubCA to sign the device-related information and the public key of the device according to a given cryptographic algorithm, to form a signature of the SubCA. Then, the SubCA delivers a digital certificate to the device, so that the device holds the digital certificate. The digital certificate includes a subject, the public key of the device, and the signature of the SubCA, and the subject of the digital certificate includes the device-related information. For the digital certificate, it may be considered that the digital certificate is obtained by signing the SubCA certificate.

Based on the root certificate, the SubCA certificate, and digital certificate that are described above, it can be learned that signing of certificates is nested. To be specific, the root certificate is signed to obtain the SubCA certificate, and the SubCA certificate is signed to obtain the digital certificate. The root certificate, the SubCA certificate, and the digital certificate form a certificate chain. In some implementations, SubCAs include a plurality of levels, and a SubCA certificate of a highest-level SubCA in the SubCAs with the plurality of levels is obtained by signing the root certificate. A SubCA certificate of a SubCA with another level other than the highest level is obtained by signing by a SubCA certificate of a previous-level SubCA. The digital certificate is obtained by signing a SubCA certificate of a lowest-level SubCA. For example, SubCAs include a level-2 CA and a level-3 CA. In this case, a SubCA certificate of the level-2 CA is obtained by signing the root certificate, a SubCA certificate of the level-3 CA is obtained by signing the SubCA certificate of the level-2 CA, and the digital certificate is obtained by signing the SubCA certificate of the level-3 CA. Certainly, in some implementations, the foregoing SubCA and SubCA certificates may not exist. In this case, the digital certificate is obtained by directly signing the root certificate, and the root certificate and the digital certificate form a certificate chain.

Second, a process of verifying a digital certificate by a device is described.

One device needs to trust at least one root certificate, and the root certificate trusted by the device is a root certificate held by a RootCA trusted by the device. Based on this, the device trusts all certificates obtained by signing based on the trusted root certificate. Correspondingly, when verifying validity of a digital certificate, the device needs to determine whether a certificate chain in which the digital certificate is located includes the root certificate trusted by the device. In other words, the process of verifying the digital certificate by the device starts from a certificate that signs the digital certificate and ends at tracing a root certificate. If the traced root certificate is the root certificate trusted by the device, the device may trust the digital certificate, or in other words, the digital certificate is valid, and verification succeeds. Alternatively, if the traced root certificate is not the root certificate trusted by the device, the device does not trust the digital certificate, or in other words, the digital certificate is invalid, and verification fails. Therefore, the process of verifying the digital certificate depends on the root certificate. The root certificate is an anchor of trust (anchor of trust) for a PKI to ensure communication security.

According to the foregoing descriptions, the digital certificate may be obtained by signing the SubCA certificate or may be obtained by directly signing the root certificate. Herein, a digital certificate verification process is described by using an example in which the digital certificate is obtained by signing the SubCA certificate.

Because the digital certificate is obtained by signing the SubCA certificate, a signature included in the digital certificate should be obtained by signing by using the private key of the SubCA. Therefore, the device needs to obtain the SubCA certificate, to obtain, from the SubCA certificate, the public key that is of the SubCA and that corresponds to the private key of the SubCA, so that the device can verify the signature included in the digital certificate by using the public key of the SubCA.

Before using the public key of the SubCA, the device needs to verify the SubCA certificate. The device obtains the root certificate trusted by the device, and obtains the public key of the RootCA from the root certificate. If the device can decrypt the signature included in the SubCA certificate by using the public key of the RootCA, it indicates that the signature included in the SubCA certificate is indeed obtained by signing by using the private key of the RootCA. Therefore, the device can determine that the SubCA certificate is indeed a certificate obtained by signing the root certificate held by the RootCA trusted by the device, and therefore can trust the SubCA certificate.

After trusting the SubCA certificate, the device may use the public key of the SubCA. If the device can decrypt the signature included in the digital certificate by using the public key of the SubCA, it indicates that the signature included in the digital certificate is indeed obtained by signing by using the private key of the SubCA. Further, the device may determine that the digital certificate is indeed a certificate obtained by signing the SubCA certificate. Because the device trusts the SubCA certificate, the device also trusts the digital certificate. That is, verification performed by the device on the digital certificate succeeds, and the digital certificate is valid.

It should be understood that when SubCAs include a plurality of levels, validity of a SubCA certificate of a highest-level SubCA in the SubCAs with the plurality of levels is verified based on the root certificate. Validity of a SubCA certificate of a SubCA with a level other than the highest level is verified based on a SubCA certificate of a previous-level SubCA. Validity of the digital certificate is verified based on a SubCA certificate of a lowest-level SubCA.

Then, a reason why the root certificate needs to be updated is described.

As mentioned above, signing of certificates is nested. Therefore, a validity period of a SubCA certificate cannot exceed that of a root certificate, and a validity period of a digital certificate cannot exceed that of the SubCA certificate. New digital certificates with specific validity periods need to be signed frequently. Therefore, the root certificate cannot be updated after a validity period of the root certificate expires (that is, after the root certificate is invalid or expires). Instead, the root certificate needs to be updated in advance, to ensure normal distribution of digital certificates. For example, if the validity period of the root certificate is 10 years, the validity period of the SubCA certificate is six years, and the validity period of the digital certificate is four years, the root certificate needs to be updated before a remaining validity period of the root certificate reaches four years. In this way, a new SubCA certificate can be signed by using the updated root certificate, and then a new digital certificate with a validity period of four years is signed by using the new SubCA certificate. If the root certificate is not updated before the remaining validity period of the root certificate reaches four years, the new digital certificate with the validity period of four years cannot be signed. Similarly, the root certificate needs to be updated again before a remaining validity period of the updated root certificate reaches four years.

Further, a root certificate update manner is described.

The root certificate update manner includes extending a root certificate (certificate updating) and introducing a new root certificate (certificate rekeying). In a manner of extending a root certificate, only a validity period of the root certificate is extended, and a public key of a RootCA and a private key of the RootCA are not changed, and a cryptographic algorithm used when the private key of the RootCA is used for signature is not changed. In a manner of introducing a new root certificate, a public key of a RootCA and a private key of the RootCA need to be updated. For example, lengths of the public key of the RootCA and the private key of the RootCA are changed, and a cryptographic algorithm used when the private key of the RootCA is used for signature may be updated.

Although the public key of the RootCA, the private key of the RootCA, and the cryptographic algorithm are not changed in the manner of extending the root certificate, the root certificate needs to be re-signed. This does not reduce management costs from a perspective of certificate management. In addition, extending the validity period of the root certificate means that the public key of the RootCA and the private key of the RootCA are subject to password attacks for a longer time. As a result, security of the root certificate may be deteriorated to some extent, and communication security between different devices cannot be ensured. Moreover, the validity period of the root certificate cannot be extended infinitely, and the manner of introducing the new root certificate needs to be used in the future. In conclusion, the manner of extending the root certificate applies only to a scenario in which the root certificate is temporarily updated and cannot fundamentally resolve a root certificate update problem.

In the manner of introducing the new root certificate, when the public key of the RootCA and the private key of the RootCA are updated, key lengths may be increased based on a cryptanalysis progress and requirements of related regulators and standard organizations. In addition, the cryptographic algorithm may be updated, and attack difficulty is increased. This ensures security of the root certificate, and helps ensure communication security between different devices. Therefore, when the root certificate is updated, the manner of introducing the new root certificate is used, to fundamentally resolve the root certificate update problem.

In conclusion, the root certificate cannot be updated after the validity period of the root certificate ends. Instead, the root certificate needs to be updated in advance, and the manner of introducing the new root certificate is used during a root certificate update. Therefore, a case in which at least two root certificates coexist occurs. In addition, different devices that need to perform communication may trust different root certificates. How to verify validity of a digital certificate in this case becomes an urgent problem to be resolved.

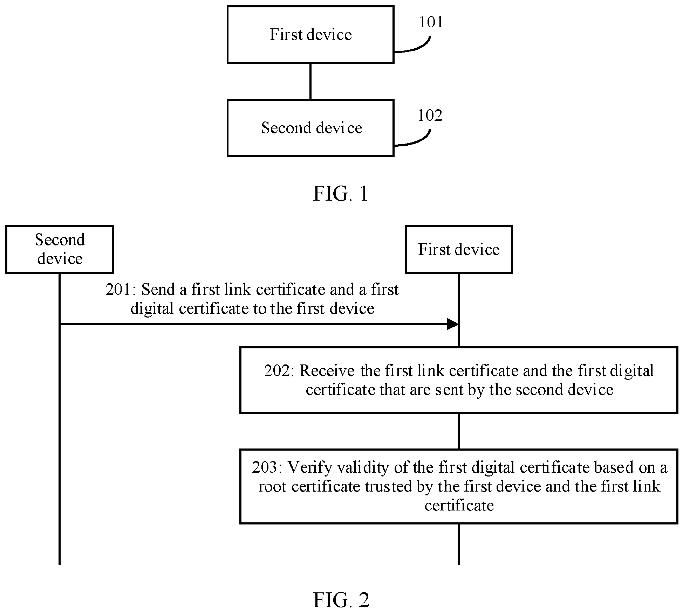

For the foregoing case, embodiments of this application provide a digital certificate verification method. The method is applied to an implementation environment shown in FIG. 1. As shown in FIG. 1, the implementation environment includes a first device 101 and a second device 102 that are communicatively connected. The second device 102 is a device that has an uploading function and a communication function. The uploading function is used by the second device 102 to accept a management operation of a management device, so that the management device uploads, based on an actual requirement, certificates that need to be used in the digital certificate verification method. For example, the management device includes but is not limited to a server, a controller, a network management system, and the like. This is not limited herein. The communication function is used by the first device 101 to interact with the second device 102. The first device 101 is a device that has at least the communication function. The first device 101 may have the uploading function, or may not have the uploading function. This is not limited herein.

Based on the implementation environment shown in FIG. 1, an embodiment of this application provides a digital certificate verification method. The method is implemented through an interaction process between the first device and the second device. As shown in FIG. 2, the method includes the following step 201 to step 203.

Step 201: The second device sends a first link certificate and a first digital certificate to the first device.

The second device stores at least two valid root certificates, at least one link (link) certificate, and the first digital certificate. Because the at least two root certificates are valid, a moment at which the second device performs step 201 falls within an intersection of validity periods of the at least two root certificates. The first link certificate sent by the second device to the first device is at least one of the at least one link certificate, and the first link certificate is used to verify validity of the first digital certificate. For example, the second device obtains these certificates through an uploading process. For example, the uploading process may be completed before the second device performs step 201. In this case, the second device stores these certificates, and reads the stored certificates when performing step 201. Herein, an occasion for completing the uploading process is not limited.

The following separately describes the at least two root certificates, the at least one link certificate, and the first digital certificate that are stored in the second device.

The at least two root certificates: The at least two root certificates are root certificates trusted by the second device.

Different root certificates in the at least two root certificates have different validity periods. Therefore, when any two root certificates are selected from the at least two root certificates, the any two root certificates include a root certificate with an earlier validity period and a root certificate with a later validity period. A validity period of a root certificate corresponds to a start moment and an end moment. For example, in the root certificate with the earlier validity period and the root certificate with the later validity period, a start moment corresponding to the validity period of the root certificate with the earlier validity period is earlier than a start moment corresponding to the validity period of the root certificate with the later validity period. In addition, an end moment corresponding to the validity period of the root certificate with the earlier validity period is earlier than an end moment corresponding to the validity period of the root certificate with the later validity period. For example, the validity period of the root certificate with the earlier validity period starts from the beginning of a first year to the end of a second year, and the validity period of the root certificate with the later validity period starts from the beginning of the second year to the end of a fourth year.

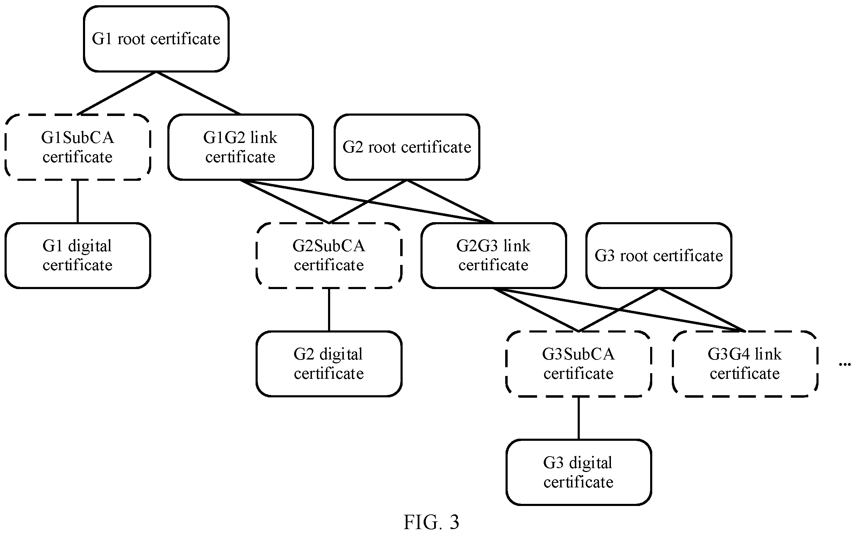

For example, a root certificate may be referred to as an "n^{th} generation" root certificate, and is represented as a Gn root certificate. n is a positive integer greater than or equal to 1, an upper limit of a value of n is equal to a quantity N of root certificates, and N is a positive integer greater than or equal to 2. An earlier validity period of a root certificate indicates a smaller value of n. For example, refer to FIG. 3. There are three root certificates. A root certificate with an earliest validity period is referred to as a "1^{st} generation" root certificate and is represented as a G1 root certificate, a root certificate with a second earliest validity period is referred to as a "2^{nd} generation" root certificate and is represented as a G2 root certificate, and a root certificate with a latest validity period is referred to as a "3^{rd} generation" root certificate and is represented as a G3 root certificate. For example, a second device may be referred to as an "n'^{th} generation" device and is represented as a Gn' generation device. A value of n' is the same as a value of n corresponding to a root certificate that is trusted by the second device and that has a latest validity period. For example, if the root certificate that is trusted by the second device and that has the latest validity period is the G3 root certificate, the second device may be referred to as a "3^{rd} generation" device and is represented as a G3 device.

The at least one link certificate: One link certificate is obtained by signing, based on a private key of a root certificate with an earlier validity period in two root certificates, a public key of a root certificate with a later validity period in the two root certificates, and the two root certificates are any two of the at least two root certificates.

A public key of a root certificate is a public key included in the root certificate, and a private key of the root certificate is a private key corresponding to the public key included in the root certificate. For example, a subject of the root certificate with the later validity period and a public key of the root certificate with the later validity period are signed by using a private key of the root certificate with the earlier validity period, to obtain a signature of the root certificate with the earlier validity period. Therefore, a link certificate may be generated, and the link certificate includes the subject of the root certificate with the later validity period, the public key of the root certificate with the later validity period, and the signature of the root certificate with the earlier validity period. The root certificate with the earlier validity period is represented as an old (old) root certificate, and the root certificate with the later validity period is represented as a new (new) root certificate. In this case, the generated link certificate is represented as a NewWithOld link certificate, that is, the link certificate is obtained by signing a public key of the new root certificate by using a private key of the old root certificate.

For the link certificate, because the private key of the root certificate with the earlier validity period is used for signature when the link certificate is generated, the link certificate may be considered as a certificate obtained by signing the root certificate with the earlier validity period. Correspondingly, the root certificate with the earlier validity period also needs to be used to verify validity of the link certificate. In addition, because the link certificate includes the subject of the root certificate with the later validity period and the public key of the root certificate with the later validity period, a certificate obtained by signing the root certificate with the later validity period may be considered as a certificate obtained by signing the link certificate. Correspondingly, if validity of a certificate can be verified by the root certificate with the later validity period, the validity of the certificate can also be verified by the link certificate and the root certificate with the earlier validity period.

For example, a link certificate may be represented as a GxGy link certificate. x is a value of n corresponding to the root certificate with the earlier validity period in two root certificates, and y is a value of n corresponding to the root certificate with the later validity period in the two root certificates. For example, refer to FIG. 3. If a link certificate is obtained by signing a private key of a G2 root certificate based on a private key of a G1 root certificate, the link certificate is represented as a G1G2 link certificate. The G1G2 link certificate may be considered as a certificate signed by using the G1 root certificate. A certificate signed by using the G2 root certificate may be considered as a certificate signed by using the G1G2 link certificate. For a G2G3 link certificate and a G3G4 link certificate shown in FIG. 3, details are not described herein again.

In some implementations, the two root certificates are any two of the at least two root certificates. In other words, every two root certificates in at least one root certificate are used to generate one link certificate. If a quantity of root certificates is N, a quantity of link certificates is (N²-N)/2. For example, root certificates include the G1 root certificate, the G2 root certificate, and the G3 root certificate. A private key of the G1 root certificate is used to sign a public key of the G2 root certificate, to obtain the G1G2 link certificate. A private key of the G2 root certificate is used to sign a public key of the G3 root certificate, to obtain the G2G3 link certificate. A private key of the G1 root certificate is used to sign a public key of the G3 root certificate, to obtain the G1G3 link certificate. In total, three link certificates are obtained.

For example, the two root certificates are any two of root certificates with adjacent validity periods in the at least two root certificates. In other words, every two root certificates with adjacent validity periods in at least one root certificate are used to generate one link certificate. When a quantity of root certificates is N, a quantity of link certificates is (N-1). For example, root certificates still include the G1 root certificate, the G2 root certificate, and the G3 root certificate. The private key of the G1 root certificate is used to sign the public key of the G2 root certificate, to obtain the G1G2 link certificate, and the private key of the G2 root certificate is used to sign the public key of the G3 root certificate, to obtain the G2G3 link certificate. In total, two link certificates are obtained.

The first digital certificate: The first digital certificate is generated based on a private key of a root certificate with a latest validity period in at least two root certificates trusted by the second device and information about the second device.

The information about the second device includes but is not limited to related information about the second device and a public key of the second device. The private key of the root certificate with the latest validity period is used to sign the related information about the second device and the public key of the second device, to obtain a signature of the root certificate with the latest validity period. Therefore, the first digital certificate may be generated, the first digital certificate includes a subject, the public key of the second device, and the signature of the root certificate with the latest validity period, and the subject is the related information about the second device. For example, the first digital certificate is a certificate signed by using the root certificate with the latest validity period, and the validity of the first digital certificate is verified based on the root certificate with the latest validity period. For example, it can be learned from the foregoing descriptions that a root certificate is represented as a Gn root certificate. In this case, the first digital certificate obtained by signing the Gn root certificate is represented as a Gn digital certificate. For example, refer to FIG. 3. A G3 digital certificate may be obtained by signing the G3 root certificate.

The foregoing separately describes the at least two root certificates, the at least one link certificate, and the first digital certificate that are stored in the second device. The following further describes the first link certificate based on the at least one link certificate described above. In an example embodiment, the first link certificate includes the following case A1 and case A2.

Case A1: The first link certificate is a certificate selected from the at least one link certificate based on a root certificate trusted by the first device.

In case A1, before the second device performs step 201, the method further includes: The second device queries the root certificate trusted by the first device, where the root certificate trusted by the first device is at least one of the at least two root certificates stored in the second device. The second device selects the first link certificate from the at least one link certificate based on the root certificate trusted by the first device, where the root certificate trusted by the first device is used to verify validity of the first link certificate.

For example, the second device communicates with the first device, to query the root certificate trusted by the first device. Alternatively, a management device stores the root certificate trusted by the first device, and the second device communicates with the management device, to query the root certificate trusted by the first device. Alternatively, the second device may query, in another manner, the root certificate trusted by the first device. This is not limited herein.

After obtaining, through querying, the root certificate trusted by the first device, the second device selects the first link certificate from the at least one link certificate. For example, a manner in which the second device selects the first link certificate includes the following case A11 and case A12.

Case A11: The first device trusts one root certificate.

In case A11, the second device determines, from the at least one link certificate, a link certificate generated based on a reference root certificate as the first link certificate. A validity period of the reference root certificate is not earlier than a validity period of the root certificate trusted by the first device, and is not later than a validity period of a root certificate with a latest validity period.

For example, if the root certificate trusted by the first device is the G1 root certificate, and the root certificate with the latest validity period is the G3 root certificate, reference root certificates include the G1 root certificate, the G2 root certificate, and the G3 root certificate. If every two root certificates are used to generate one link certificate, link certificates generated based on the reference root certificates include the G1G2 link certificate, the G2G3 link certificate, and the G1G3 link certificate. If every two root certificates with adjacent validity periods are used to generate one link certificate, link certificates generated based on the reference root certificates include the G1G2 link certificate and the G2G3 link certificate.

For example, some or all of the link certificates generated based on the reference root certificates are determined as first link certificates. This is not limited herein, provided that it is ensured that the first link certificates can be used to verify the validity of the first digital certificate, and the root certificate trusted by the first device can be used to verify the validity of the first link certificates. For example, when the link certificates generated based on the reference root certificates include the G1G2 link certificate, the G2G3 link certificate, and the G1G3 link certificate, the G1G2 link certificate and the G2G3 link certificate may be used as first link certificates. Alternatively, the G1G3 link certificate may be used as the first link certificate. Alternatively, the G1G2 link certificate, the G2G3 link certificate, and the G1G3 link certificate may all be used as first link certificates.

For example, when the root certificate trusted by the first device is only a root certificate with a latest validity period, the second device may directly send the first digital certificate to the first device, and the second device does not need to send the first link certificate.

Case A12: The first device trusts at least two root certificates.

In some implementations, for each root certificate trusted by the first device, the second device determines, according to case A1, a link certificate corresponding to the root certificate. Then, the second device performs combination and deduplication on link certificates corresponding to root certificates, and determines a link certificate obtained through combination and deduplication as the first link certificate. For example, root certificates trusted by the first device include the G1 root certificate and the G2 root certificate, and a root certificate that is trusted by the second device and that has a latest validity period is the G3 root certificate. In this case, the second device determines, according to case A1, that link certificates corresponding to the G1 root certificate include the G1G2 link certificate, the G2G3 link certificate, and the G1G3 link certificate, and the second device determines, according to case A1, that a link certificate corresponding to the G2 root certificate includes the G2G3 link certificate. A repeated G2G3 link certificate is removed through a combination and deduplication process, to obtain first link certificates, and the first link certificates include the G1G2 link certificate, the G2G3 link certificate, and the G1G3 link certificate.

In some other implementations, the second device selects one root certificate from the at least two root certificates trusted by the first device, determines, according to case A1, a link certificate corresponding to the selected root certificate, and determines the link certificate corresponding to the selected root certificate as the first link certificate. For example, the root certificate selected by the second device is a root certificate that has a validity period closest to that of a root certificate with a latest validity period and that is in the at least two root certificates trusted by the first device. For example, root certificates trusted by the first device include the G1 root certificate and the G2 root certificate, and a root certificate that has a latest validity period and that is stored in the second device is the G3 root certificate. In this case, the second device selects, from the G1 root certificate and the G2 root certificate, the G2 root certificate with a validity period closer to that of the G3 root certificate instead of the G1 root certificate. Then, the second device determines, according to case A1, that a link certificate corresponding to the G2 root certificate is the G2G3 link certificate, to obtain that the first link certificate is the G2G3 link certificate. Certainly, the second device may also randomly select from the at least two root certificates trusted by the first device. This is not limited herein.

For example, case A1 that includes case A11 and case A12 is applicable to a scenario in which the second device is allowed to query the root certificate trusted by the first device, and this scenario includes but is not limited to an advanced version of transport layer security (transport layer security, TLS) 1.2, TLS 1.3, and the like. For example, in this scenario, the first device sends a list of trusted authorities (list of trusted authorities) to the second device, and the second device determines, based on the list of trusted authorities, the root certificate trusted by the first device.

In addition, in case A1, the second device needs to select the first link certificate from the at least one link certificate based on the root certificate trusted by the first device. Therefore, the second device needs to have a strong certificate management capability, and the strong certificate management capability is used by the second device to select and send a link certificate. In addition, because query and selection are performed in case A1, both a quantity of certificates included in first link certificates and a quantity of transmission resources required for sending the first link certificates by the second device to the first device in case A1 are less than a manner in which all link certificates are used as first link certificates (that is, the following case A2). Therefore, case A1 is applicable to a scenario in which transmission resources are insufficient.

Case A2: All link certificates are used as first link certificates.

In this case, the second device does not need to query the root certificate trusted by the first device. Instead, the second device directly uses all the link certificates as the first link certificates.

For example, case A2 is applicable to a scenario in which the second device is not allowed to query the root certificate trusted by the first device, and this scenario includes but is not limited to an open secure sockets layer (open secure sockets layer, OpenSSL) protocol. Certainly, case A2 is also applicable to a scenario in which the second device is allowed to query the root certificate trusted by the first device. For details, refer to descriptions in case A1 above. Details are not described herein again. Compared with case A1, in case A2, the second device does not need to select the first link certificate from the at least one link certificate based on the root certificate trusted by the first device. Therefore, the second device does not need to have the strong certificate management capability.

Case A1 and case A2 described above are merely two examples of the first link certificate, and are not intended to limit the first link certificate. In conclusion, the second device needs to send the first link certificate and the first digital certificate to the first device.

Step 202: The first device receives the first link certificate and the first digital certificate that are sent by the second device.

Because the second device sends the first link certificate and the first digital certificate to the first device, the first device correspondingly receives the first link certificate and the first digital certificate that are sent by the second device.

Step 203: The first device verifies the validity of the first digital certificate based on the root certificate trusted by the first device and the first link certificate.

The root certificate trusted by the first device is a root certificate that is already obtained by the first device, or before the first device receives the first link certificate and the first digital certificate, the first device already stores the root certificate trusted by the first device. Therefore, the first device does not need to obtain these root certificates through an additional uploading process. For example, the root certificate trusted by the first device is preset on the first device when the first device is produced or before the first device accesses a network for use. A manner in which the first device obtains the root certificate trusted by the first device is not limited in this embodiment of this application. In addition, as described above, the root certificate trusted by the first device is at least one of the at least two root certificates stored in the second device.

In some implementations, the first device first verifies the validity of the first link certificate based on the root certificate trusted by the first device, that is, determines whether a signature included in the first link certificate can be decrypted by using a public key of the root certificate trusted by the first device. After verifying that the first link certificate is valid, the first device verifies the validity of the first digital certificate based on the first link certificate, that is, determines whether a signature included in the first digital certificate can be decrypted by using a public key included in the first link certificate.

For example, verifying the validity of the first digital certificate based on the first link certificate includes: The first device determines, from first link certificates, at least one group of alternative link certificates based on the root certificate trusted by the first device, where each group of alternative link certificates include at least one of the first link certificates. The first device determines a group of alternative link certificates that include a minimum quantity of certificates as a target link certificate, and verifies validity of the target link certificate based on the root certificate trusted by the first device. If the target link certificate is valid, the validity of the first digital certificate is verified based on the target link certificate.

For example, the root certificate trusted by the first device is the G1 root certificate, a root certificate that is trusted by the second device and that has a latest validity period is the G3 root certificate, and the first link certificates include the G1G2 link certificate, the G2G3 link certificate, and the G1G3 link certificate. In this case, the first device determines that a first group of alternative link certificates is the G1G3 link certificate, and determines that a second group of alternative link certificates is the G1G2 link certificate and the G2G3 link certificate. Because a small quantity of certificates, that is, only one certificate, is included in the first group of alternative link certificates, the first device determines the first group of alternative link certificates as the target link certificate. Then, the first device first verifies validity of the G1G3 link certificate based on the G1 root certificate, and then verifies the validity of the first digital certificate based on the G1G3 link certificate.

Because the first device selects the group of alternative link certificates that include the minimum quantity of certificates as the target link certificate, the first device establishes a shortest certificate chain in a process of verifying the validity of the first digital certificate. The shortest certificate chain includes the root certificate trusted by the first device, the target link certificate, and the first digital certificate. For example, this manner is applicable to some versions of OpenSSL and a Java development kit (Java development kit, JDK) 8 or a later version. For example, in OpenSSL 1.0.2u, this manner is used by default when an X509_V_FLAG_TRUSTED_FIRST option is enabled. In OpenSSL 1.1.1g, this manner is used by default.

If the first device verifies that the first digital certificate is valid, the first device may communicate with the second device based on the first digital certificate. For example, the second device sends, to the first device, information encrypted based on a private key of the second device, and the first device may decrypt the information by using a public key that is of the second device and that is included in the first digital certificate, to implement secure communication with the second device.

If the first device verifies that the first digital certificate is invalid, the first device may directly determine that verification on the first digital certificate fails, and does not communicate with the second device. Alternatively, for example, the first device may further traverse other groups of alternative link certificates, and separately verify the validity of the first digital certificate based on the other groups of alternative link certificates. If the first device verifies that the first digital certificate is invalid based on each group of alternative link certificates, the first device determines that the first digital certificate is invalid, and the first device does not communicate with the second device.

For example, when the root certificate trusted by the first device includes only a root certificate with a latest validity period, the first device may not use the first link certificate, but may directly use the root certificate trusted by the first device, that is, the root certificate with the latest validity period, to verify the validity of the first digital certificate.

It should be noted that, when the first device does not use the first link certificate but directly uses the root certificate trusted by the first device to verify the first digital certificate, the first device has two verifiable levels, including the root certificate and the first digital certificate. When the first device completes verification on the digital certificate based on both the root certificate trusted by the first device and the first link certificate, the first device has at least three verifiable levels, including the root certificate, the first link certificate, and the first digital certificate. If the first device uses a plurality of first link certificates, the first device has four or more verifiable levels. Therefore, when this embodiment of this application is applied, it needs to be ensured that the first device has a high verifiable level. In other words, compared with a verification manner in which the first link certificate is not used, in this embodiment of this application, a quantity of verifiable levels of the first device needs to be increased by at least one.

Certainly, in this embodiment of this application, the first device does not need to be reconstructed when the digital certificate verification method provided in this embodiment of this application is applied, but a high verifiable level may be configured for the first device when the first device is manufactured or accesses a network for use, so that the first device can perform the digital certificate verification method provided in this embodiment of this application without being reconstructing.

It can be learned from a process in which the first device verifies the validity of the first digital certificate that the first device can verify the first digital certificate by using only the root certificate trusted by the first device and the first link certificate sent by the second device. Therefore, the first device does not need to additionally upload another certificate. In addition, the second device and the first device do not need to confirm a certificate trusted by a peer device. Therefore, a process of verifying the first digital certificate is transparent and imperceptible to the first device, and the first device does not need to perceive a case in which at least two root certificates coexist. Therefore, the digital certificate verification method provided in this embodiment of this application is essentially automatically compatible with the first device, and the first device does not need to be improved.

In this embodiment of this application, the first device does not need to additionally upload another certificate, and does not need to perceive the case in which the at least two root certificates coexist. Therefore, the digital certificate verification method provided in this embodiment of this application has a wide application scope. Scenarios to which the method is applicable include but are not limited to: a scenario in which the first device cannot perform uploading, a scenario in which the first device is difficult to perform uploading or the first device performs slow uploading, a scenario in which the first device cannot perceive the case in which the at least two root certificates coexist, and the like. In addition, the digital certificate verification method provided in this embodiment of this application is simple. This reduces complexity of verifying a digital certificate in a root certificate update process, and reduces verification costs.

The foregoing content is descriptions of step 201 to step 203. It can be learned that step 201 to step 203 are a process in which the first device verifies the first digital certificate of the second device. For example, when the second device stores the at least two valid root certificates, the at least one link certificate, and the first digital certificate, the second device may also verify validity of a second digital certificate of the first device. For example, that the second device verifies the second digital certificate includes but is not limited to the following case B1 and case B2.

Case B1: If the root certificate trusted by the first device is any one of the at least two root certificates, the method further includes: The first device sends the second digital certificate to the second device, where the second digital certificate is generated based on a private key of the root certificate trusted by the first device and information about the first device. The second device receives the second digital certificate sent by the first device, and the second device verifies the validity of the second digital certificate based on the root certificate trusted by the first device.

For the information about the first device, refer to the foregoing descriptions of the information about the second device. For the second digital certificate, refer to the foregoing descriptions of the first digital certificate. Details are not described herein again.

Because the root certificate trusted by the first device is any one of the at least two root certificates, and two root certificates are required to generate one link certificate, the first device sends only the second digital certificate to the second device, but does not send a link certificate to the second device. Therefore, when receiving the second digital certificate sent by the first device, the second device may directly verify the validity of the second digital certificate based on the root certificate trusted by the first device. For a verification manner, refer to a manner in which the first device verifies the first digital certificate in step 203. Details are not described herein again.

Case B2: Root certificates trusted by the first device are at least two of the at least two root certificates, and the method further includes: The first device sends a second link certificate and the second digital certificate to the second device, where the second link certificate is at least one of link certificates corresponding to the root certificates trusted by the first device, and the second digital certificate is generated based on a private key of a root certificate with a latest validity period in the root certificates trusted by the first device and information about the first device. The second device receives the second link certificate and the second digital certificate that are sent by the first device, and the second device verifies the second digital certificate based on the root certificates trusted by the first device and the second link certificate.

Because there are at least two root certificates trusted by the first device, a link certificate may be generated based on the root certificates trusted by the first device, and the generated link certificate is a link certificate corresponding to the root certificates trusted by the first device. The second link certificate may be determined based on the generated link certificate. For a manner of generating the link certificate based on the root certificates trusted by the first device, refer to descriptions of the at least one link certificate in step 201. For a manner of determining the second link certificate based on the generated link certificate, refer to a manner of selecting and obtaining the first link certificate by the second device in step 201. Details are not described herein again.

After the second device receives the second link certificate and the second digital certificate that are sent by the first device, the second device verifies the validity of the second digital certificate based on the root certificates trusted by the first device and the second link certificate. For a verification manner, refer to a manner in which the first device verifies the first digital certificate in step 203. Details are not described herein again.

In some implementations, the second device stores certificates separately by using two storage areas. For example, the two storage areas include a first storage area and a second storage area. The first storage area is used to store certificates that need to be sent to the first device, and the certificates include but are not limited to the at least one link certificate and the first digital certificate. The second storage area is used to store certificates sent by the first device, and the certificates include but are not limited to the second link certificate and the second digital certificate. Therefore, when the second device needs to send a certificate to the first device, the second device only needs to read the first storage area. When the second device needs to verify a certificate sent by the first device, the second device only needs to read the second storage area.

For example, a manner in which certificates are stored separately by using the two storage areas is applicable to scenarios including but not limited to OpenSSL 1.0.2 and the JDK 8. For example, in OpenSSL 1.0.2, chainCApath is specified as the foregoing first storage area, and verifyCApath is specified as the foregoing second storage area. For another example, in the JDK 8, KeyStore is specified as the foregoing first storage area, and TrustStore is specified as the foregoing second storage area.

Similarly, the first device may also use two storage areas, one of the storage areas is used to store certificates that need to be sent to the second device, for example, the link certificate corresponding to the root certificates trusted by the first device and the second digital certificate, and the other storage area is used to store certificates sent by the second device, for example, the first link certificate and the first digital certificate. In this way, certificates are separately stored. Details are not described herein.

In addition, as time elapses, some of the at least two valid root certificates may expire. For example, before a root certificate with a latest validity period expires, and after a root certificate with a non-latest validity period in the at least two root certificates expires, only the root certificate with the latest validity period is valid. In this case, the method further includes: The second device sends the first digital certificate to the first device, the first device receives the first digital certificate sent by the second device, and the first device verifies the first digital certificate based on the root certificate with the latest validity period. The root certificate trusted by the first device includes the root certificate with the latest validity period.

Because the root certificate with the non-latest validity period in the at least two root certificates expires, the at least one link certificate stored in the second device also expires, and both the second device and the first device trust only the root certificate with the latest validity period. Therefore, the second device does not need to send the first link certificate, but directly sends the first digital certificate to the first device, and the first device may verify the first digital certificate based on the root certificate with the latest validity period. Similarly, the first device may also directly send the second digital certificate to the second device, and the second device may verify the first digital certificate based on the root certificate with the latest validity period.

In an example embodiment, the method further includes: The second device revokes, in a direct revocation manner, at least one certificate of the at least two root certificates, the at least one link certificate, and the first digital certificate, to invalidate the at least one revoked certificate.

Certificate revocation (certificate revocation) is also referred to as certificate revoking. If a certificate needs to be invalidated before a validity period of the certificate expires, the certificate needs to be revoked. A request for comments (request for comments, RFC) 5280 describes two revocation manners: direct revocation and indirect revocation. The indirect revocation manner is not universally applicable and may not be applicable to software such as OpenSSL, TLS, and red hat products (red hat products). Therefore, for example, in this embodiment of this application, a certificate is revoked in the direct revocation manner.

In the direct revocation manner, a certificate is revoked by whoever signs the certificate. In other words, certificates signed by the RootCA are revoked by the RootCA. For example, the certificates are revoked by signing certificate revocation lists (certificate revocation lists, CRLs). Signers of the CRLs are the same as signers of certificates included in the CRLs.

In addition, when at least two root certificates are valid, after a root certificate with a latest validity period is introduced, a private key of a root certificate with a non-latest validity period may be directly destroyed or sealed. Alternatively, the private key of the root certificate with the non-latest validity period may not be destroyed or sealed, but continues to be used to sign the foregoing CRLs. Certainly, the private key is no longer used to sign a new certificate. In this way, security of the private key is ensured by performing restrictions and enhancing management.

For example, the first device may revoke, in the direct revocation manner, at least one certificate of the root certificates trusted by the first device, to invalidate the at least one revoked certificate. Details are not described herein.

In an example embodiment, the second device meets a reference condition, and the reference condition includes at least one of the following conditions: A capacity of certificate storage space is greater than a capacity threshold, and the second device has a root certificate update function; or the second device has an alarm function.

The second device is enabled to meet the reference condition, so that a problem that a capacity of certificate storage space in the second device is insufficient due to an emergency root certificate update (for example, a root certificate needs to be updated urgently when it is detected that a private key of the root certificate is insecure or even leaked), switching to a new cryptosystem (for example, switching to a post-quantum cryptographic algorithm), and the like. In addition, the second device may generate an alarm to provide a coping strategy for a user. For example, the user is prompted to replace the second device with another device in time, to ensure continuity of a communication service. This improves cryptographic agility (cryptographic agility) of the second device, and is applicable to a case in which the second device is security critical equipment (security critical equipment). For example, the second device may generate an alarm when the second device does not meet the reference condition.

For example, the first device meets the foregoing reference condition, or the first device has the alarm function. The reference condition and the alarm function are not described herein again.

In an example embodiment, the method further includes: The second device sends, to the first device, application scenario information corresponding to the second device. The first device receives the application scenario information sent by the second device, and after verifying that the first digital certificate is valid, the first device confirms that the application scenario information is correct.

In some implementations, an application scenario is a code signing PKI system, and correspondingly, the application scenario information is code, a patch, or an installation package that needs to be released. In this case, after verifying that the first digital certificate is valid, the first device may determine that the code, the patch, or the installation package needs to be correct, so that the code, the patch, or the installation package can be used. For example, in this application scenario, the second device sends, to the first device, the first link certificate, the first digital certificate, and the foregoing code, patch, or installation package in a cryptographic message syntax (cryptographic message syntax, CMS) manner. The CMS manner allows carrying the first link certificate and the first digital certificate, so that the first device verifies the validity of the first digital certificate in the foregoing manner. Certainly, if the first device can obtain the first link certificate and the first digital certificate in another manner, the CMS manner also allows not carrying these certificates.

In an example embodiment, the first device should support as many cryptographic algorithms and key lengths as possible, to ensure that a digital certificate verification process can still be normally performed when a new cryptographic algorithm and a new key length are used for the first link certificate and the first digital certificate. For example, algorithms supported by the first device include but are not limited to various versions of the Rivest-Shamir-Adleman (Rivest-Shamir-Adleman, RSA)-public key cryptography standards (public-key cryptography standards, PKCS), an RSA-probabilistic signature scheme (probabilistic signature scheme, PSS), an elliptic curve digital signature algorithm (elliptic curve digital signature algorithm, ECDSA), and the like. Key lengths supported by the first device include but are not limited to RSA 2048, RSA 3072, RSA 4096 or above, ECDSA 256, ECDSA 384, ECDSA 512, and the like.

In some other implementations, an application scenario is a timestamp PKI system, and correspondingly, the application scenario information is a timestamp (timestamp). In this case, after verifying that the first digital certificate is valid, the first device confirms that the timestamp is correct, and may embed the timestamp into related data of the first device for use. The timestamp may be a timestamp randomly generated by a timestamp authority, and the timestamp may be used by devices including the first device. Alternatively, the timestamp may be a timestamp delivered by the timestamp authority to the first device based on a request of the first device, and the timestamp is used only by the first device. This is not limited herein.

In addition, the digital certificate verification solution provided in this embodiment of this application may be further combined with another type of device, to form a hybrid architecture, thereby further expanding an application scope and increasing redundancy and flexibility of a system.

For example, a third device may be added, the third device stores at least two root certificates and a third digital certificate, the third digital certificate is generated based on a private key of a root certificate with a latest validity period and information about the third device, and the third device does not store at least one link certificate. The second device provided in this embodiment of this application may send the first link certificate and the first digital certificate to the third device, so that the third device verifies the validity of the first digital certificate. The second device provided in this embodiment of this application may further receive the third digital certificate sent by the third device, to verify validity of the third digital certificate. Before and after the root certificate with the latest validity period expires, the third device sends the third digital certificate, and does not need to switch a sent certificate. This reduces interference to a service.

For another example, a fourth device may be added, the fourth device stores at least two root certificates and a fourth digital certificate, and the fourth digital certificate is generated based on a private key of a root certificate with an earliest validity period and information about the fourth device. The second device provided in this embodiment of this application may send the first link certificate and the first digital certificate to the fourth device, so that the fourth device verifies the validity of the first digital certificate. The first device provided in this embodiment of this application may send the second digital certificate to the fourth device, or may send the second link certificate and the second digital certificate to the fourth device, so that the fourth device verifies the validity of the second digital certificate. The second device provided in this embodiment of this application may further receive the fourth digital certificate sent by the fourth device, to verify validity of the fourth digital certificate. If the root certificate trusted by the first device provided in this embodiment of this application includes a root certificate with an earliest validity period, the first device may also receive the fourth digital certificate sent by the fourth device and verify the validity of the fourth digital certificate.

In addition, the third device and the fourth device may also interact with each other. The fourth device may receive the third digital certificate sent by the third device and verify the validity of the third digital certificate. The third device may also receive the fourth digital certificate sent by the fourth device and verify the validity of the fourth digital certificate.

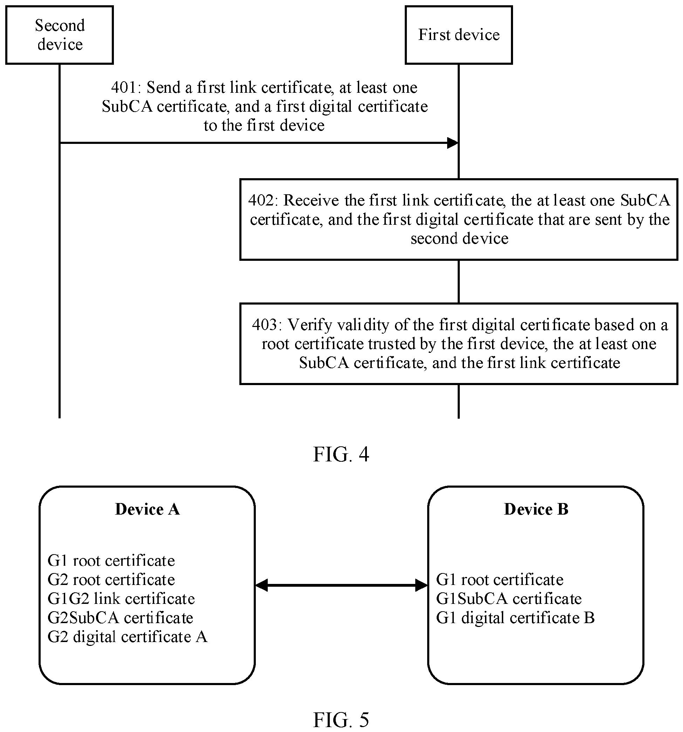

In addition, an embodiment of this application further provides a digital certificate verification method that is implemented through interaction between a first device and a second device. As shown in FIG. 4, the method includes the following step 401 to step 403.

Step 401: The second device sends a first link certificate, at least one SubCA certificate, and a first digital certificate to the first device.

The second device stores at least two valid root certificates, the at least one SubCA certificate, at least one link certificate, and the first digital certificate. For the at least two root certificates, the at least one link certificate, and the first link certificate, refer to corresponding descriptions in the foregoing method embodiment shown in FIG. 2. Details are not described herein again.

The first digital certificate is obtained by signing information about the second device based on a private key of the at least one SubCA certificate, and the at least one SubCA certificate is obtained by signing information about a SubCA based on a private key of a root certificate with a latest validity period. For example, when SubCAs include a plurality of levels, a SubCA certificate of a highest-level SubCA in the SubCAs with the plurality of levels is obtained by signing the root certificate. A SubCA certificate of a SubCA with another level other than the highest level is obtained by signing by a SubCA certificate of a previous-level SubCA. A digital certificate is obtained by signing a SubCA certificate of a lowest-level SubCA. For example, a SubCA certificate obtained by signing a Gn root certificate is represented as a GnSubCA certificate. For example, refer to FIG. 3. An example in which only one level of SubCA is included is used. A G3 SubCA certificate is obtained by signing the G3 root certificate, and a G3 digital certificate is obtained by signing the G3 SubCA certificate.

Step 402: The first device receives the first link certificate, the at least one SubCA certificate, and the first digital certificate that are sent by the second device.

Because the second device performs step 401, the first device correspondingly receives the first link certificate, the at least one SubCA certificate, and the first digital certificate that are sent by the second device.

Step 403: The first device verifies validity of the first digital certificate based on a root certificate trusted by the first device, the at least one SubCA certificate, and the first link certificate.

The first device first verifies validity of the first link certificate based on the root certificate trusted by the first device, that is, determines whether a signature included in the first link certificate can be decrypted by using a public key of the root certificate trusted by the first device. After verifying that the first link certificate is valid, the first device verifies validity of the at least one SubCA certificate based on the first link certificate, that is, determines whether a signature included in the at least one SubCA can be decrypted by using a public key included in the first digital certificate. After verifying that the at least one SubCA certificate is valid, the first device verifies the validity of the first digital certificate based on the at least one SubCA certificate, that is, determines whether a signature included in the first digital certificate can be decrypted by using a public key included in the at least one SubCA certificate. It should be understood that when SubCAs include a plurality of levels, validity of a SubCA certificate of a highest-level SubCA is verified based on the first link certificate, and the validity of the first digital certificate is verified based on a SubCA certificate of a lowest-level SubCA. Details are not described herein again.

It should be noted that step 203 describes a process in which the first device verifies the validity of the first digital certificate based on the root certificate trusted by the first device and the first link certificate. Content described in step 203 is applicable to step 403 herein, and the content is also included herein by reference.

The following describes a digital certificate verification process by using an example in which root certificates include the G1 root certificate and the G2 root certificate. For example, the verification process includes the following case C1 to case C3.

Case C1: As shown in FIG. 5, a device A is a new G2 device, and trusts the G1 root certificate, the G2 root certificate, a G1G2 link certificate, a G2SubCA certificate signed by the G2 root certificate, and a G2 digital certificate A signed by the G2SubCA certificate; and a device B is an old G1 device, and trusts the G1 root certificate, a G1 SubCA certificate signed by the G1 root certificate, and a G1 digital certificate B signed by the G1 SubCA certificate. In case C1, the device A corresponds to the foregoing second device, the device B corresponds to the foregoing first device, and the root certificate trusted by the first device is a root certificate with an earliest validity period.

Before the G1 root certificate expires, the device A sends the G1G2 link certificate, the G2SubCA certificate, and the G2 digital certificate A to the device B, and the device B verifies the G1 root certificate, the G1G2 link certificate, the G2SubCA certificate, and the G2 digital certificate A in sequence.

Before the G1 root certificate expires, the device B sends the G1 SubCA certificate and the G1 digital certificate B to the device A, and the device A verifies the G1 root certificate, the G1 SubCA certificate, and the G1 digital certificate B in sequence.

After the G1 root certificate expires, the device B stops running and gets offline, and the device A and the device B does not interact with each other.

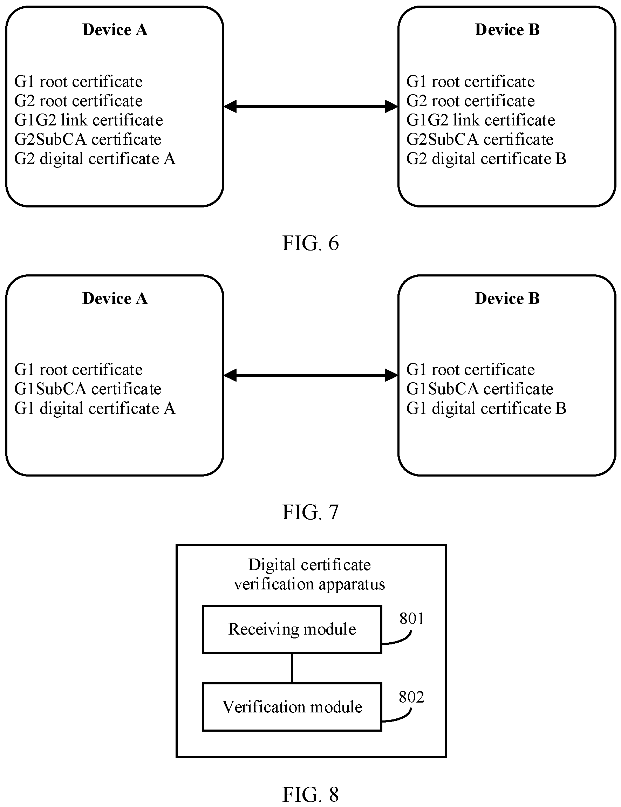

Case C2: As shown in FIG. 6, a device A is the same as the device A in case C1, and a device B is also a new G2 device, and trusts the G1 root certificate, the G2 root certificate, a G1G2 link certificate, a G2SubCA certificate, and a G2 digital certificate B. In case C2, the device A corresponds to the foregoing second device, the device B corresponds to the foregoing first device, and the root certificate trusted by the first device is a root certificate with a latest validity period.

Before the G1 root certificate expires, the device A sends the G1G2 link certificate, the G2SubCA certificate, and the G2 digital certificate A to the device B, and the device B verifies the G1 root certificate, the G1G2 link certificate, the G2SubCA certificate, and the G2 digital certificate A in sequence.

Before the G1 root certificate expires, the device B sends the G1G2 link certificate, the G2SubCA certificate, and the G2 digital certificate B to the device A, and the device A verifies the G1 root certificate, the G1G2 link certificate, the G2SubCA certificate, and the G2 digital certificate B in sequence.

After the G1 root certificate expires, the device A sends the G2SubCA certificate and the G2 digital certificate A to the device B, and the device B verifies the G2 root certificate, the G2SubCA certificate, and the G2 digital certificate A in sequence.

After the G1 root certificate expires, the device B sends the G2SubCA certificate and the G2 digital certificate B to the device A, and the device A verifies the G2 root certificate, the G2SubCA certificate, and the G2 digital certificate B in sequence.

Case C3: As shown in FIG. 7, a device A is an old G1 device, and trusts the G1 root certificate, a G1 SubCA certificate, and a G1 digital certificate A signed by the G1 SubCA certificate, and a device B is the same as the device B in case C1. In case C1, both the device A and the device B correspond to the foregoing first device, and the root certificate trusted by the first device is a root certificate with an earliest validity period.

Before the G1 root certificate expires, the device A sends the G1 SubCA certificate and the G1 digital certificate A to the device B, and the device B verifies the G1 root certificate, the G1 SubCA certificate, and the G1 digital certificate A in sequence.

Before the G1 root certificate expires, the device B sends the G1 SubCA certificate and the G1 digital certificate B to the device A, and the device A verifies the G1 root certificate, the G1 SubCA certificate, and the G1 digital certificate B in sequence.

After the G1 root certificate expires, both the device A and the device B stop running and get offline, and the device A and the device B do not interact with each other.

In conclusion, a new device (the device A in case C1, and the device A and the device B in case C2) and an old device (the device B in case C1, and the device A and the device B in case C3) do not need to confirm a root certificate trusted by a peer device. Before the G1 root certificate expires, the new device sends the G1G2 link certificate, the G2SubCA certificate, and a digital certificate signed by the G2SubCA certificate, and after the G1 root certificate expires, the new device stops sending the G1G2 link certificate, but sends the G2SubCA certificate and the digital certificate signed by the G2SubCA certificate. Only before the G1 root certificate expires, the old device sends the G1 SubCA certificate and a digital certificate signed by the G1 SubCA certificate, and after the G1 root certificate expires, the old device stops running and gets offline.

In conclusion, the first device stores the root certificate trusted by the first device, and the first device does not need to additionally upload another certificate, and only needs to receive the first link certificate and the first digital certificate that are sent by the second device (or receive the first link certificate, the at least one subordinate CA certificate, and the first link certificate that are sent by the second device). In this way, the validity of the first digital certificate can be verified. In addition, the first device and the second device do not need to mutually confirm a root certificate trusted by a peer device, so that a case in which at least two root certificates coexist is transparent and imperceptible to the first device. The method provided in this embodiment of this application is simple and easy to implement, and has a wide application scope. Even if the first device does not have an uploading function or cannot perceive the case in which the at least two root certificates coexist, the first device can still verify a digital certificate. In addition, complexity of a digital certificate verification process is reduced, and verification costs are reduced.

The foregoing describes digital certificate verification methods provided in embodiments of this application. Corresponding to the method shown in FIG. 2, an embodiment of this application further provides another digital certificate verification apparatus. The apparatus is used in a first device. For the first device, refer to descriptions in the method embodiments. Details are not described herein again. The apparatus is configured to perform, by using modules shown in FIG. 8, the digital certificate verification method performed by the first device in FIG. 2. As shown in FIG. 8, the digital certificate verification apparatus provided in this embodiment of this application includes the following modules:
a receiving module 801, configured to receive a first link certificate and a first digital certificate that are sent by a second device, where the first link certificate is at least one of at least one link certificate stored in the second device, one link certificate is obtained by signing, based on a private key of a root certificate with an earlier validity period in two root certificates, a public key of a root certificate with a later validity period in the two root certificates, the two root certificates are any two of at least two root certificates stored in the second device, and the first digital certificate is generated based on a private key of a root certificate with a latest validity period in the at least two root certificates and information about the second device; and
a verification module 802, configured to verify validity of the first digital certificate based on a root certificate trusted by the first device and the first link certificate, where the root certificate trusted by the first device is at least one of the at least two root certificates.

In an example embodiment, the root certificate trusted by the first device is at least one of the at least two root certificates, and the apparatus further includes a first sending module, configured to send a second digital certificate to the second device, so that the second device verifies validity of the second digital certificate, where the second digital certificate is generated based on a private key of the root certificate trusted by the first device and information about the first device.

In an example embodiment, root certificates trusted by the first device include at least two of the at least two root certificates, and the apparatus further includes a second sending module, configured to send a second link certificate and a second digital certificate to the second device, so that the second device verifies validity of the second digital certificate, where the second link certificate is at least one of link certificates corresponding to the root certificates trusted by the first device, and the second digital certificate is generated based on a private key of a root certificate with a latest validity period in the root certificates trusted by the first device and information about the first device.

In an example embodiment, the root certificates trusted by the first device include a root certificate with a latest validity period, and the receiving module 801 is further configured to: before the root certificate with the latest validity period expires, and after a root certificate with a non-latest validity period in the at least two root certificates expires, receive the first digital certificate sent by the second device; and the verification module 802 is further configured to verify the validity of the first digital certificate based on the root certificate with the latest validity period.

In an example embodiment, the apparatus further includes a revocation module, configured to revoke, in a direct revocation manner, at least one certificate of the root certificates trusted by the first device, to invalidate the at least one revoked certificate.

In an example embodiment, the receiving module 801 is further configured to receive application scenario information sent by the second device; and the verification module 802 is further configured to: after verifying that the first digital certificate is valid, confirm that the application scenario information is correct.

In an example embodiment, the first device meets a reference condition, and the reference condition includes at least one of the following conditions: A capacity of certificate storage space is greater than a capacity threshold, and the first device has a root certificate update function; or the first device has an alarm function.

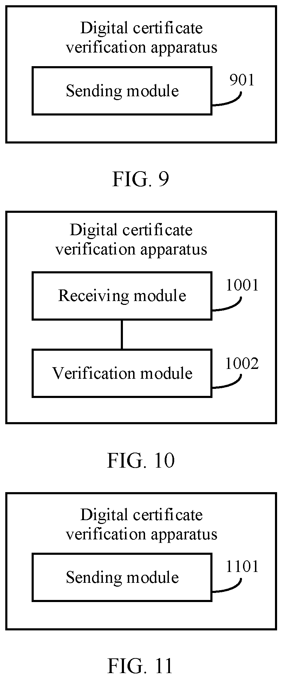

Corresponding to the method shown in FIG. 2, an embodiment of this application further provides a digital certificate verification apparatus. The apparatus is used in a second device. For the second device, refer to descriptions in the method embodiments. Details are not described herein again. The apparatus is configured to perform, by using a module shown in FIG. 9, the digital certificate verification method performed by the second device in FIG. 2. As shown in FIG. 9, the digital certificate verification apparatus provided in this embodiment of this application includes the following module:
a sending module 901, configured to send a first link certificate and a first digital certificate to a first device, so that the first device verifies validity of the first digital certificate. The second device stores at least two valid root certificates, at least one link certificate, and the first digital certificate, one link certificate is obtained by signing, based on a private key of a root certificate with an earlier validity period in two root certificates, a public key of a root certificate with a later validity period in the two root certificates, the two root certificates are any two of the at least two root certificates, and the first digital certificate is generated based on a private key of a root certificate with a latest validity period in the at least two root certificates and information about the second device. The first link certificate is at least one of the at least one link certificate, and the first link certificate is used to verify the validity of the first digital certificate.

In an example embodiment, the two root certificates are any two of root certificates with adjacent validity periods in the at least two root certificates.

In an example embodiment, the apparatus further includes a query module, configured to query a root certificate trusted by the first device, where the root certificate trusted by the first device is at least one of the at least two root certificates; and a selection module, configured to select the first link certificate from the at least one link certificate based on the root certificate trusted by the first device, where the root certificate trusted by the first device is used to verify validity of the first link certificate.

In an example embodiment, the root certificate trusted by the first device is any one of the at least two root certificates, and the apparatus further includes a first verification module, configured to: receive a second digital certificate sent by the first device, where the second digital certificate is generated based on a private key of the root certificate trusted by the first device and information about the first device; and verify validity of the second digital certificate based on the root certificate trusted by the first device.

In an example embodiment, root certificates trusted by the first device are at least two of the at least two root certificates, and the apparatus further includes a second verification module, configured to: receive a second link certificate and a second digital certificate that are sent by the first device, where the second link certificate is at least one of link certificates corresponding to the root certificates trusted by the first device, and the second digital certificate is generated based on a private key of a root certificate with a latest validity period in the root certificates trusted by the first device and information about the first device; and verify validity of the second digital certificate based on the root certificates trusted by the first device and the second link certificate.

In an example embodiment, the root certificates trusted by the first device include a root certificate with a latest validity period, and the sending module 901 is further configured to: before the root certificate with the latest validity period expires, and after a root certificate with a non-latest validity period in the at least two root certificates expires, send the first digital certificate to the first device, so that the first device verifies the validity of the first digital certificate based on the root certificate with the latest validity period.

In an example embodiment, the apparatus further includes a revocation module, configured to revoke, in a direct revocation manner, at least one certificate of the at least two root certificates, the at least one link certificate, and the first digital certificate, to invalidate the at least one revoked certificate.

In an example embodiment, the sending module 901 is further configured to send, to the first device, application scenario information corresponding to the second device, so that after verifying that the first digital certificate is valid, the first device confirms that the application scenario information is correct.

In an example embodiment, the second device meets a reference condition, and the reference condition includes at least one of the following conditions: A capacity of certificate storage space is greater than a capacity threshold, and the second device has a root certificate update function; or the second device has an alarm function.

In an example embodiment, the first device is configured to verify the validity of the first digital certificate based on the root certificate trusted by the first device and the first link certificate, where the root certificate trusted by the first device is at least one of the at least two root certificates.

Corresponding to the method shown in FIG. 4, an embodiment of this application further provides a digital certificate verification apparatus. The apparatus is used in a first device. The apparatus is configured to perform, by using modules shown in FIG. 10, the digital certificate verification method performed by the first device in FIG. 4. As shown in FIG. 10, the apparatus includes the following several modules:
a receiving module 1001, configured to receive a first link certificate, at least one subordinate certification authority certificate, and a first digital certificate that are sent by a second device, where the first link certificate is at least one of at least one link certificate stored in the second device, one link certificate is obtained by signing, based on a private key of a root certificate with an earlier validity period in two root certificates, a public key of a root certificate with a later validity period in the two root certificates, the two root certificates are any two of at least two root certificates stored in the second device, and the first digital certificate is generated based on a private key of a root certificate with a latest validity period in the at least two root certificates, the at least one subordinate certification authority certificate stored in the second device, and information about the second device; and
a verification module 1002, configured to verify validity of the first digital certificate based on a root certificate trusted by the first device, the at least one subordinate certification authority certificate, and the first link certificate, where the root certificate trusted by the first device is at least one of the at least two root certificates.

Corresponding to the method shown in FIG. 4, an embodiment of this application further provides a digital certificate verification apparatus. The apparatus is used in a second device, the second device stores at least two valid root certificates, at least one subordinate certification authority certificate, at least one link certificate, and a first digital certificate, one link certificate is obtained by signing, based on a private key of a root certificate with an earlier validity period in two root certificates, a public key of a root certificate with a later validity period in the two root certificates, the two root certificates are any two of the at least two root certificates, and the first digital certificate is generated based on a private key of a root certificate with a latest validity period in the at least two root certificates, the at least one subordinate certification authority certificate, and information about the second device. The apparatus is configured to perform, by using a module shown in FIG. 11, the digital certificate verification method performed by the second device in FIG. 4. As shown in FIG. 11, the apparatus includes the following module:
a sending module 1101, configured to send a first link certificate, at least one subordinate certification authority certificate, and a first digital certificate to a first device, so that the first device verifies validity of the first digital certificate, where the first link certificate is at least one of the at least one link certificate, and the first link certificate and the at least one subordinate certification authority certificate are used to verify the validity of the first digital certificate.

In conclusion, the first device stores a root certificate trusted by the first device, and the first device does not need to additionally upload another certificate or perceive coexistence of at least two root certificates. Instead, the first device may verify the first digital certificate based on the root certificate trusted by the first device and the received first link certificate (or based on the root certificate trusted by the first device, the received at least one subordinate CA certificate, and the first link certificate). Therefore, the apparatus provided in this embodiment of this application has a wide application scope. Even if the first device does not have an uploading function or cannot perceive the coexistence of the at least two root certificates, the first device can still verify a digital certificate. Therefore, complexity of a digital certificate verification process is reduced, and verification costs are reduced.

It should be understood that, when the apparatuses provided in FIG. 8 to FIG. 11 implement functions of the apparatuses, division of the foregoing functional modules is merely used as an example for description. In actual application, the foregoing functions may be allocated to different functional modules for implementation based on a requirement, that is, an internal structure of a device is divided into different functional modules, to complete all or some of the functions described above. In addition, the apparatuses provided in the foregoing embodiments and the method embodiments belong to a same idea. For specific implementation processes thereof, refer to the method embodiments. Details are not described herein again.

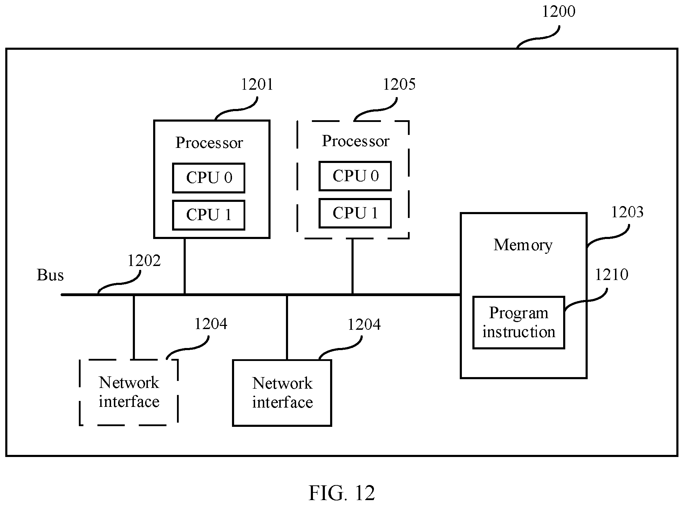

FIG. 12 is a diagram of a structure of an example of a digital certificate verification device 1200 according to this application. The digital certificate verification device 1200 includes at least one processor 1201, a memory 1203, and at least one network interface 1204.

The processor 1201 is, for example, a general-purpose central processing unit (Central Processing Unit, CPU), a digital signal processor (digital signal processor, DSP), a network processor (network processor, NP), a GPU, a neural-network processing unit (neural-network processing unit, NPU), a data processing unit (Data Processing Unit, DPU), a microprocessor, one or more integrated circuits or application-specific integrated circuits (application-specific integrated circuits, ASIC) configured to implement the solutions of this application, a programmable logic device (programmable logic device, PLD), another general-purpose processor or another programmable logic device, a discrete gate, a transistor logic device, a discrete hardware component, or any combination thereof. The PLD is, for example, a complex programmable logic device (complex programmable logic device, CPLD), a field-programmable gate array (field-programmable gate array, FPGA), a generic array logic (generic array logic, GAL), or any combination thereof. The general-purpose processor may be a microprocessor or any conventional processor or the like. It should be noted that the processor may be a processor that supports an advanced reduced instruction set computing machines (advanced RISC machines, ARM) architecture. The processor may implement or execute various logical blocks, modules, and circuits described with reference to content disclosed in this application. Alternatively, the processor may be a combination of processors implementing a computing function, for example, a combination including one or more microprocessors, or a combination of a DSP and a microprocessor.

Optionally, the digital certificate verification device 1200 further includes a bus 1202. The bus 1202 is configured to transfer information between components of the digital certificate verification device 1200. The bus 1202 may be a peripheral component interconnect standard (peripheral component interconnect, PCI for short) bus, an extended industry standard architecture (extended industry standard architecture, EISA for short) bus, or the like. The bus 1202 may be classified into an address bus, a data bus, a control bus, and the like. For ease of representation, the bus is represented by using only one line in FIG. 12. However, this does not indicate that there is only one bus or only one type of bus.

The memory 1203 is, for example, a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache.

By way of example, and not limitation, many forms of ROMs and RAMs are available. For example, the ROM is a compact disc read-only memory (compact disc read-only memory, CD-ROM). The RAM includes but is not limited to a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

Alternatively, the memory 1203 may be another type of storage device that can store static information and instructions. Alternatively, the memory 1203 may be another type of dynamic storage device that can store information and instructions. Alternatively, the memory 1203 may be another compact disc storage, an optical disc storage (including a compact disc, a laser disc, an optical disc, a digital versatile disc, a Blu-ray disc, and the like), a magnetic disk storage medium or another magnetic storage device, or any other medium that can be used to carry or store expected program code in a form of an instruction or a data structure and that can be accessed by a computer. This is not limited. For example, the memory 1203 exists independently, and is connected to the processor 1201 through the bus 1202. The memory 1203 may be alternatively integrated with the processor 1201.

The network interface 1204 is configured to communicate with another device or a communication network by using an apparatus of any transceiver type. The communication network may be the Ethernet, a radio access network (radio access network, RAN), a wireless local area network (wireless local area network, WLAN), or the like. The network interface 1204 may include a wired network interface, and may further include a wireless network interface. Specifically, the network interface 1204 may be an Ethernet (Ethernet) interface, for example, a fast Ethernet (Fast Ethernet, FE) interface, a gigabit Ethernet (Gigabit Ethernet, GE) interface, an asynchronous transfer mode (Asynchronous Transfer Mode, ATM) interface, a WLAN interface, a cellular network interface, or a combination thereof. The Ethernet interface may be an optical interface, an electrical interface, or a combination thereof. In some implementations of this application, the network interface 1204 may be used by the digital certificate verification device 1200 to communicate with another device.

In a specific implementation, in some implementations, the processor 1201 may include one or more CPUs, for example, a CPU 0 and a CPU 1 shown in FIG. 12. Each of the processors may be a single-core processor, or may be a multi-core processor. The processor herein may be one or more devices, circuits, and/or processing cores configured to process data (for example, computer program instructions).

In a specific implementation, in some implementations, the digital certificate verification device 1200 may include a plurality of processors, for example, the processor 1201 and a processor 1205 shown in FIG. 12. Each of the processors may be a single-core processor, or may be a multi-core processor. The processor herein may be one or more devices, circuits, and/or processing cores configured to process data (for example, computer program instructions).

In some implementations, the memory 1203 is configured to store program instructions 1210 for executing the solutions of this application, and the processor 1201 may execute the program instructions 1210 stored in the memory 1203. In other words, the digital certificate verification device 1200 may implement, by using the processor 1201 and the program instructions 1210 in the memory 1203, the methods provided in the method embodiments, that is, the methods performed by the first device or the second device in FIG. 2 and FIG. 4. The program instructions 1210 may include one or more software modules. Optionally, the processor 1201 may also store the program instructions for executing the solutions of this application.

In a specific implementation process, the digital certificate verification device 1200 in this application may correspond to a first network element device configured to perform the foregoing methods, and the processor 1201 in the digital certificate verification device 1200 reads the instructions in the memory 1203, so that the digital certificate verification device 1200 shown in FIG. 12 can perform all or some of the steps in the method embodiments.

The digital certificate verification device 1200 may further correspond to the apparatuses shown in FIG. 8 to FIG. 11. Each functional module in the apparatuses shown in FIG. 8 to FIG. 11 is implemented by using software of the digital certificate verification device 1200. In other words, the functional modules included in the apparatuses shown in FIG. 8 to FIG. 11 are generated after the processor 1201 in the digital certificate verification device 1200 reads the program instructions 1210 stored in the memory 1203.

Steps of the methods shown in FIG. 2 and FIG. 4 are implemented by using an integrated logic circuit of hardware in the processor of the digital certificate verification device 1200, or by using instructions in a form of software. The steps in the method embodiments disclosed with reference to this application may be directly performed and completed by a hardware processor, or may be performed and completed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in a memory, and the processor reads information in the memory, and completes the steps in the method embodiments in combination with hardware of the processor. To avoid repetition, details are not described herein again.

In an example embodiment, a digital certificate verification system is provided. The system includes a first device and a second device that are communicatively connected. The first device and the second device are configured to implement the digital certificate verification method shown in FIG. 2, or the first device and the second device are configured to implement the digital certificate verification method shown in FIG. 4.

In an example embodiment, a computer program (product) is provided. The computer program (product) includes computer program code. When the computer program code is run by a computer, the computer is enabled to perform the digital certificate verification method shown in FIG. 2 or FIG. 4.

In an example embodiment, a computer-readable storage medium is provided. The computer-readable storage medium stores a program or instructions. When the program or the instructions is/are run on a computer, the digital certificate verification method shown in FIG. 2 or FIG. 4 is performed.

In an example embodiment, a chip is provided, including a processor, configured to invoke, from a memory, and run instructions stored in the memory, to enable a computer in which the chip is installed to perform the digital certificate verification method shown in FIG. 2 or FIG. 4.

In an example embodiment, another chip is provided, including an input interface, an output interface, a processor, and a memory. The input interface, the output interface, the processor, and the memory are connected through an internal connection path. The processor is configured to execute code in the memory, and when the code is executed, a computer in which the chip is installed performs the digital certificate verification method shown in FIG. 2 or FIG. 4.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk Solid State Disk), or the like.

The terms such as "first" and "second" in this application are used to distinguish between same or similar items with basically same roles and functions. It should be understood that there is no logical or timing dependency between "first", "second", and "n^{th}", and neither a quantity nor an execution sequence is limited. It should also be understood that although the following descriptions use terms such as "first" and "second" to describe various elements, these elements should not be limited by the terms. These terms are simply used to distinguish one element from another.

It should be further understood that, in embodiments of this application, sequence numbers of the processes do not mean execution sequences. The execution sequences of the processes should be determined based on functions and internal logic of the processes, and should not be construed as any limitation on implementation processes of embodiments of this application.

The term "at least one" in this application means one or more, and the term "a plurality of" in this application means two or more. For example, a plurality of first devices refer to two or more first devices. The terms "system" and "network" in this specification are often used interchangeably herein.

It should be understood that the terms used in the descriptions of the various examples herein are merely intended to describe specific examples and are not intended to impose a limitation. The terms "one" ("a" and "an") and "the" of singular forms used in the descriptions of the various examples and the appended claims are also intended to include plural forms, unless otherwise specified in the context clearly.

It should further be understood that the term "and/or" used in this specification indicates and includes any or all possible combinations of one or more of the associated listed items. The term "and/or" describes an association relationship for describing associated objects and represents that three relationships may exist. For example, A and/or B may represent the following three cases: Only A exists, both A and B exist, and only B exists. In addition, a character "/" in this application generally indicates an "or" relationship between the associated objects.

It should be further understood that the terms "if" and "if" may be interpreted as a meaning of "when" ("when" or "upon") or "in response to determining" or "in response to detecting". Similarly, according to the context, the phrase "if it is determined that" or "if (a stated condition or event) is detected" may be interpreted as a meaning of "when it is determined that" or "in response to determining" or "when (a stated condition or event) is detected" or "in response to detecting (a stated condition or event)".

The foregoing descriptions are embodiments of this application, but are not intended to limit this application. Any modification, equivalent replacement, improvement, or the like made without departing from the principle of this application should fall within the protection scope of this application.

## Claims

1. A digital certificate verification method, wherein the method is applied to a first device, and the method comprises:
receiving, by the first device, a first link certificate and a first digital certificate that are sent by a second device, wherein the first link certificate is at least one of at least one link certificate stored in the second device, one link certificate is obtained by signing, based on a private key of a root certificate with an earlier validity period in two root certificates, a public key of a root certificate with a later validity period in the two root certificates, the two root certificates are any two of at least two root certificates stored in the second device, and the first digital certificate is generated based on a private key of a root certificate with a latest validity period in the at least two root certificates and information about the second device; and
verifying, by the first device, validity of the first digital certificate based on a root certificate trusted by the first device and the first link certificate, wherein the root certificate trusted by the first device is at least one of the at least two root certificates.

2. The method according to claim 1, wherein the root certificate trusted by the first device is any one of the at least two root certificates, and the method further comprises:
sending, by the first device, a second digital certificate to the second device, so that the second device verifies validity of the second digital certificate, wherein the second digital certificate is generated based on a private key of the root certificate trusted by the first device and information about the first device.

3. The method according to claim 1, wherein root certificates trusted by the first device are at least two of the at least two root certificates, and the method further comprises:
sending, by the first device, a second link certificate and a second digital certificate to the second device, so that the second device verifies validity of the second digital certificate, wherein the second link certificate is at least one of link certificates corresponding to the root certificates trusted by the first device, and the second digital certificate is generated based on a private key of a root certificate with a latest validity period in the root certificates trusted by the first device and information about the first device.

4. The method according to any one of claims 1 to 3, wherein the root certificates trusted by the first device comprise a root certificate with a latest validity period, and the method further comprises:
before the root certificate with the latest validity period expires, and after a root certificate with a non-latest validity period in the at least two root certificates expires, receiving, by the first device, the first digital certificate sent by the second device; and
verifying, by the first device, the validity of the first digital certificate based on the root certificate with the latest validity period.

5. The method according to any one of claims 1 to 4, wherein the method further comprises:
revoking, by the first device in a direct revocation manner, at least one certificate of the root certificates trusted by the first device, to invalidate the at least one revoked certificate.

6. The method according to any one of claims 1 to 5, wherein the method further comprises:
receiving, by the first device, application scenario information sent by the second device; and
after verifying that the first digital certificate is valid, confirming, by the first device, that the application scenario information is correct.

7. The method according to any one of claims 1 to 6, wherein the first device meets a reference condition, and the reference condition comprises at least one of the following conditions: a capacity of certificate storage space is greater than a capacity threshold, and the first device has a root certificate update function; or
the first device has an alarm function.

8. A digital certificate verification method, wherein the method is applied to a first device, and the method comprises:
receiving, by the first device, a first link certificate, at least one subordinate certification authority certificate, and a first digital certificate that are sent by a second device, wherein the first link certificate is at least one of at least one link certificate stored in the second device, one link certificate is obtained by signing, based on a private key of a root certificate with an earlier validity period in two root certificates, a public key of a root certificate with a later validity period in the two root certificates, the two root certificates are any two of at least two root certificates stored in the second device, and the first digital certificate is generated based on a private key of a root certificate with a latest validity period in the at least two root certificates, the at least one subordinate certification authority certificate stored in the second device, and information about the second device; and
verifying, by the first device, validity of the first digital certificate based on a root certificate trusted by the first device, the at least one subordinate certification authority certificate, and the first link certificate, wherein the root certificate trusted by the first device is at least one of the at least two root certificates.

9. A digital certificate verification method, wherein the method is applied to a second device, the second device stores at least two valid root certificates, at least one link certificate, and a first digital certificate, one link certificate is obtained by signing, based on a private key of a root certificate with an earlier validity period in two root certificates, a public key of a root certificate with a later validity period in the two root certificates, the two root certificates are any two of the at least two root certificates, and the first digital certificate is generated based on a private key of a root certificate with a latest validity period in the at least two root certificates and information about the second device; and the method comprises:
sending, by the second device, a first link certificate and the first digital certificate to a first device, so that the first device verifies validity of the first digital certificate, wherein the first link certificate is at least one of the at least one link certificate, and the first link certificate is used to verify the validity of the first digital certificate.

10. The method according to claim 9, wherein the two root certificates are any two root certificates with adjacent validity periods in the at least two root certificates.

11. The method according to claim 9 or 10, wherein before the sending, by the second device, a first link certificate and the first digital certificate to a first device, the method further comprises:
querying, by the second device, a root certificate trusted by the first device, wherein the root certificate trusted by the first device is at least one of the at least two root certificates; and
selecting, by the second device, the first link certificate from the at least one link certificate based on the root certificate trusted by the first device, wherein the root certificate trusted by the first device is used to verify validity of the first link certificate.

12. The method according to any one of claims 9 to 11, wherein the root certificate trusted by the first device is any one of the at least two root certificates, and the method further comprises:
receiving, by the second device, a second digital certificate sent by the first device, wherein the second digital certificate is generated based on a private key of the root certificate trusted by the first device and information about the first device; and
verifying, by the second device, validity of the second digital certificate based on the root certificate trusted by the first device.

13. The method according to any one of claims 9 to 11, wherein root certificates trusted by the first device are at least two of the at least two root certificates, and the method further comprises:
receiving, by the second device, a second link certificate and a second digital certificate that are sent by the first device, wherein the second link certificate is at least one of link certificates corresponding to the root certificates trusted by the first device, and the second digital certificate is generated based on a private key of a root certificate with a latest validity period in the root certificates trusted by the first device and information about the first device; and
verifying, by the second device, validity of the second digital certificate based on the root certificates trusted by the first device and the second link certificate.

14. The method according to any one of claims 9 to 13, wherein the root certificates trusted by the first device comprise a root certificate with a latest validity period, and the method further comprises:
before the root certificate with the latest validity period expires, and after a root certificate with a non-latest validity period in the at least two root certificates expires, sending, by the second device, the first digital certificate to the first device, so that the first device verifies the validity of the first digital certificate.

15. The method according to any one of claims 9 to 14, wherein the method further comprises:
revoking, by the second device in a direct revocation manner, at least one certificate of the at least two root certificates, the at least one link certificate, and the first digital certificate, to invalidate the at least one revoked certificate.

16. The method according to any one of claims 9 to 15, wherein the method further comprises:
sending, by the second device, application scenario information corresponding to the second device to the first device, so that after verifying that the first digital certificate is valid, the first device confirms that the application scenario information is correct.

17. The method according to any one of claims 9 to 16, wherein the second device meets a reference condition, and the reference condition comprises at least one of the following conditions: a capacity of certificate storage space is greater than a capacity threshold, and the second device has a root certificate update function; or
the second device has an alarm function.

18. The method according to any one of claims 9 to 17, wherein the first device is configured to verify the validity of the first digital certificate based on the root certificate trusted by the first device and the first link certificate, wherein the root certificate trusted by the first device is at least one of the at least two root certificates.

19. A digital certificate verification method, wherein the method is applied to a second device, the second device stores at least two valid root certificates, at least one subordinate certification authority certificate, at least one link certificate, and a first digital certificate, one link certificate is obtained by signing, based on a private key of a root certificate with an earlier validity period in two root certificates, a public key of a root certificate with a later validity period in the two root certificates, the two root certificates are any two of the at least two root certificates, and the first digital certificate is generated based on a private key of a root certificate with a latest validity period in the at least two root certificates, the at least one subordinate certification authority certificate, and information about the second device; and the method comprises:
sending, by the second device, a first link certificate, the at least one subordinate certification authority certificate, and the first digital certificate to a first device, so that the first device verifies validity of the first digital certificate, wherein the first link certificate is at least one of the at least one link certificate, and the first link certificate and the at least one subordinate certification authority certificate are used to verify the validity of the first digital certificate.

20. A digital certificate verification apparatus, wherein the apparatus is used in a first device, and the apparatus comprises:
a receiving module, configured to receive a first link certificate and a first digital certificate that are sent by a second device, wherein the first link certificate is at least one of at least one link certificate stored in the second device, one link certificate is obtained by signing, based on a private key of a root certificate with an earlier validity period in two root certificates, a public key of a root certificate with a later validity period in the two root certificates, the two root certificates are any two of at least two root certificates stored in the second device, and the first digital certificate is generated based on a private key of a root certificate with a latest validity period in the at least two root certificates and information about the second device; and
a verification module, configured to verify validity of the first digital certificate based on a root certificate trusted by the first device and the first link certificate, wherein the root certificate trusted by the first device is at least one of the at least two root certificates.

21. The apparatus according to claim 20, wherein the root certificate trusted by the first device is any one of the at least two root certificates, and the apparatus further comprises:
a first sending module, configured to send a second digital certificate to the second device, so that the second device verifies validity of the second digital certificate, wherein the second digital certificate is generated based on a private key of the root certificate trusted by the first device and information about the first device.

22. The apparatus according to claim 20, wherein root certificates trusted by the first device are at least two of the at least two root certificates, and the apparatus further comprises:
a second sending module, configured to send a second link certificate and a second digital certificate to the second device, so that the second device verifies validity of the second digital certificate, wherein the second link certificate is at least one of link certificates corresponding to the root certificates trusted by the first device, and the second digital certificate is generated based on a private key of a root certificate with a latest validity period in the root certificates trusted by the first device and information about the first device.

23. The apparatus according to any one of claims 20 to 22, wherein the root certificates trusted by the first device comprise a root certificate with a latest validity period, and the receiving module is further configured to: before the root certificate with the latest validity period expires, and after a root certificate with a non-latest validity period in the at least two root certificates expires, receive the first digital certificate sent by the second device; and
the verification module is further configured to verify the validity of the first digital certificate based on the root certificate with the latest validity period.

24. The apparatus according to any one of claims 20 to 23, wherein the apparatus further comprises:
a revocation module, configured to revoke, in a direct revocation manner, at least one certificate of the root certificates trusted by the first device, to invalidate the at least revoked one certificate.

25. The apparatus according to any one of claims 20 to 24, wherein the receiving module is further configured to receive application scenario information sent by the second device; and
the verification module is further configured to: after verifying that the first digital certificate is valid, confirm that the application scenario information is correct.

26. The apparatus according to any one of claims 20 to 25, wherein the first device meets a reference condition, and the reference condition comprises at least one of the following conditions: a capacity of certificate storage space is greater than a capacity threshold, and the first device has a root certificate update function; or
the first device has an alarm function.

27. A digital certificate verification apparatus, wherein the apparatus is used in a first device, and the apparatus comprises:
a receiving module, configured to receive a first link certificate, at least one subordinate certification authority certificate, and a first digital certificate that are sent by a second device, wherein the first link certificate is at least one of at least one link certificate stored in the second device, one link certificate is obtained by signing, based on a private key of a root certificate with an earlier validity period in two root certificates, a public key of a root certificate with a later validity period in the two root certificates, the two root certificates are any two of at least two root certificates stored in the second device, and the first digital certificate is generated based on a private key of a root certificate with a latest validity period in the at least two root certificates, the at least one subordinate certification authority certificate stored in the second device, and information about the second device; and
a verification module, configured to verify validity of the first digital certificate based on a root certificate trusted by the first device, the at least one subordinate certification authority certificate, and the first link certificate, wherein the root certificate trusted by the first device is at least one of the at least two root certificates.

28. A digital certificate verification apparatus, wherein the apparatus is used in a second device, the second device stores at least two valid root certificates, at least one link certificate, and a first digital certificate, one link certificate is obtained by signing, based on a private key of a root certificate with an earlier validity period in two root certificates, a public key of a root certificate with a later validity period in the two root certificates, the two root certificates are any two of the at least two root certificates, and the first digital certificate is generated based on a private key of a root certificate with a latest validity period in the at least two root certificates and information about the second device; and the apparatus comprises:
a sending module, configured to send a first link certificate and the first digital certificate to a first device, so that the first device verifies validity of the first digital certificate, wherein the first link certificate is at least one of the at least one link certificate, and the first link certificate is used to verify the validity of the first digital certificate.

29. The apparatus according to claim 28, wherein the two root certificates are any two root certificates with adjacent validity periods in the at least two root certificates.

30. The apparatus according to claim 28 or 29, wherein the apparatus further comprises:
a query module, configured to query a root certificate trusted by the first device, wherein the root certificate trusted by the first device is at least one of the at least two root certificates; and
a selection module, configured to select the first link certificate from the at least one link certificate based on the root certificate trusted by the first device, wherein the root certificate trusted by the first device is used to verify validity of the first link certificate.

31. The apparatus according to any one of claims 28 to 30, wherein the root certificate trusted by the first device is any one of the at least two root certificates, and the apparatus further comprises:
a first verification module, configured to: receive a second digital certificate sent by the first device, wherein the second digital certificate is generated based on a private key of the root certificate trusted by the first device and information about the first device; and verify validity of the second digital certificate based on the root certificate trusted by the first device.

32. The apparatus according to any one of claims 28 to 30, wherein root certificates trusted by the first device are at least two of the at least two root certificates, and the apparatus further comprises:
a second verification module, configured to: receive a second link certificate and a second digital certificate that are sent by the first device, wherein the second link certificate is at least one of link certificates corresponding to the root certificates trusted by the first device, and the second digital certificate is generated based on a private key of a root certificate with a latest validity period in the root certificates trusted by the first device and information about the first device; and verify validity of the second digital certificate based on the root certificates trusted by the first device and the second link certificate.

33. The apparatus according to any one of claims 28 to 32, wherein the root certificates trusted by the first device comprise a root certificate with a latest validity period, and the sending module is further configured to: before the root certificate with the latest validity period expires, and after a root certificate with a non-latest validity period in the at least two root certificates expires, send the first digital certificate to the first device, so that the first device verifies the validity of the first digital certificate.

34. The apparatus according to any one of claims 28 to 33, wherein the apparatus further comprises:
a revocation module, configured to revoke, in a direct revocation manner, at least one certificate of the at least two root certificates, the at least one link certificate, and the first digital certificate, to invalidate the at least one revoked certificate.

35. The apparatus according to any one of claims 28 to 34, wherein the sending module is further configured to send, to the first device, application scenario information corresponding to the second device, so that after verifying that the first digital certificate is valid, the first device confirms that the application scenario information is correct.

36. The apparatus according to any one of claims 28 to 35, wherein the second device meets a reference condition, and the reference condition comprises at least one of the following conditions: a capacity of certificate storage space is greater than a capacity threshold, and the second device has a root certificate update function; or
the second device has an alarm function.

37. The apparatus according to any one of claims 28 to 36, wherein the first device is configured to verify the validity of the first digital certificate based on the root certificate trusted by the first device and the first link certificate, wherein the root certificate trusted by the first device is at least one of the at least two root certificates.

38. A digital certificate verification apparatus, wherein the apparatus is used in a second device, the second device stores at least two valid root certificates, at least one subordinate certification authority certificate, at least one link certificate, and a first digital certificate, one link certificate is obtained by signing, based on a private key of a root certificate with an earlier validity period in two root certificates, a public key of a root certificate with a later validity period in the two root certificates, the two root certificates are any two of the at least two root certificates, and the first digital certificate is generated based on a private key of a root certificate with a latest validity period in the at least two root certificates, the at least one subordinate certification authority certificate, and information about the second device; and the apparatus comprises:
a sending module, configured to send a first link certificate, the at least one subordinate certification authority certificate, and the first digital certificate to a first device, so that the first device verifies validity of the first digital certificate, wherein the first link certificate is at least one of the at least one link certificate, and the first link certificate and the at least one subordinate certification authority certificate are used to verify the validity of the first digital certificate.

39. A digital certificate verification device, wherein the device comprises a network interface, a memory, and a processor, the network interface is used by the device to perform communication, the memory stores at least one instruction, and the at least one instruction is loaded and executed by the processor, to enable the device to implement the digital certificate verification method according to any one of claims 1 to 19.

40. A digital certificate verification system, wherein the system comprises a first device and a second device that are communicatively connected, the first device is configured to implement the digital certificate verification method according to any one of claims 1 to 7, and the second device is configured to implement the digital certificate verification method according to any one of claims 9 to 18; or the first device is configured to implement the digital certificate verification method according to claim 8, and the second device is configured to implement the digital certificate verification method according to claim 19.

41. A computer-readable storage medium, wherein the computer-readable storage medium stores at least one instruction, and the instruction is loaded and executed by a processor, to enable a computer to implement the digital certificate verification method according to any one of claims 1 to 19.

42. A computer program product, wherein the computer program product comprises a computer program/instructions, and when the computer program/instructions is/are executed by a processor, a computer is enabled to implement the digital certificate verification method according to any one of claims 1 to 19.
